(19) Europäisches Patentamt
European Patent Office
Office européen des brevets

(11) Veröffentlichungsnummer: **0 215 740**
**B1**

(12) # EUROPÄISCHE PATENTSCHRIFT

(45) Veröffentlichungstag der Patentschrift: **02.01.91**

(21) Anmeldenummer: **86810411.8**

(22) Anmeldetag: **11.09.86**

(51) Int. Cl.$^5$: **C 08 G 63/68,** C 08 G 59/42, C 08 G 69/44, C 08 L 63/00, C 09 D 167/00, C 09 J 167/00

(54) **Verzweigte Polyester.**

(30) Priorität: **16.09.85 CH 4011/85**
**03.03.86 CH 846/86**

(43) Veröffentlichungstag der Anmeldung:
**25.03.87 Patentblatt 87/13**

(45) Bekanntmachung des Hinweises auf die Patenterteilung:
**02.01.91 Patentblatt 91/01**

(84) Benannte Vertragsstaaten:
**CH DE FR GB IT LI NL**

(56) Entgegenhaltungen:
**DE-A-2 111 816**
**DE-A-2 157 696**
**DE-A-2 743 229**

(73) Patentinhaber: **CIBA-GEIGY AG**
**Klybeckstrasse 141**
**CH-4002 Basel (CH)**

(72) Erfinder: **Mülhaupt, Rolf, Dr.**
**Chemin de la Prairie 2**
**CH-1723 Marly (CH)**
Erfinder: **Renner, Alfred, Dr.**
**Marcoup 2**
**CH-3286 Muntelier (CH)**
Erfinder: **Lauterbach, Horst, Dr.**
**Im Mühleboden 78**
**CH-4106 Therwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 215 740 B1

**Beschreibung**

Die vorliegende Erfindung betrifft neue sternförmig verzweigte Polyester, Zusammensetzungen enthaltend diese Verbindung und Harze, die durch carboxyl- oder hydroxyl-endgruppenhaltige Polyester härtbar sind, ein Verfahren zur Herstellung dieser Polyester, sowie deren Verwendung als Komponenten von Klebstoffen, Lacken oder Oberflächenbeschichtungen für den Korrosionsschutz.

Polyester mit Carboxylendgruppen finden auch Anwendung als Komponenten in Pulverlacken. In der Regel handelt es sich dabei um Verbindungen mit einem linearen Polymergerüst, die eine gewisse Löslichkeit in organischen Lösungsmitteln besitzen.

Enthalten Polymerisationsgemische neben difunktionellen Monomeren auch grössere Anteile tri- oder polyfunktioneller Monomerbausteine, so entstehen vernetzte Strukturen, die nur bedingt quellbar oder völlig unlöslich sind. Solche Produkte lassen sich für die oben genannten Zwecke in der Regel nicht verwenden.

Aus der DE—OS 2,157,696 sind verzweigte aromatische Polyester bekannt. Diese Verbindungen enthalten einen zentralen trifunktionellen Triazinkern und davon ausgehend drei im wesentlichen aromatische Polyesterketten. Die Verbindungen eignen sich als thermoplastische Formwerkstoffe mit ausgezeichneten Hochtemperatureigenschaften. Für den Einsatz in Pulverlacken oder als Härter für beispielsweise Epoxidharze sind die Verbindungen nicht geeignet, da ihnen die nötige Flexibilität und Löslichkeit fehlt; ausserdem müssen sie bei hohen Temperaturen verarbeitet werden, so dass der Härtungsvorgang häufig nicht ausreichend gesteuert werden kann.

Ferner sind aus der EP—A 87,098 1,3,5-Trianilino-s-triazine bekannt, die als Lichtschutzmittel in Kunststoffen, Farbstoffen und insbesondere in kosmetischen Präparaten Verwendung finden. In dieser Anmeldung wird ein Derivat mit Hydroxylendgruppen beschrieben (Beispiel 7), das aber erst oberhalb von 200°C schmilzt.

Gegenstand der vorliegenden Erfindung sind Verbindungen der Formeln I, II, III und IV

$$[Tr\{\!\!\!-\!A-X-\!\!\!\left(\overset{O}{\overset{\|}{C}}-O\!\left(R-O-\overset{O}{\overset{\|}{C}}-Y-\overset{O}{\overset{\|}{C}}-O\right)_n R-O-\!\left(\overset{O}{\overset{\|}{C}}-Z-\overset{O}{\overset{\|}{C}}-O\right)_q H\right]_m\Big\}_p \qquad (I),$$

$$[Tr\{\!\!\!-\!NR^2\!\left[X'-\!\left(O-\overset{O}{\overset{\|}{C}}-Y-\overset{O}{\overset{\|}{C}}-O-R\right)_o O-\!\left(\overset{O}{\overset{\|}{C}}-Z-\overset{O}{\overset{\|}{C}}-O\right)_q H\right]_m\Big\}_p \qquad (II),$$

$$[Tr\{\!\!\!-\!A-X\!\left[\overset{O}{\overset{\|}{C}}\!\left(O-R'-\overset{O}{\overset{\|}{C}}\right)_o OH\right]_m\Big\}_p \qquad (III),$$

$$[Tr\{\!\!\!-\!NR^2\!\left[X'-\!\left(O-\overset{O}{\overset{\|}{C}}-R'\right)_o O-\!\left(\overset{O}{\overset{\|}{C}}-Z-\overset{O}{\overset{\|}{C}}-O\right)_q H\right]_m\Big\}_p \qquad (IV),$$

worin Tr ein Rest der Formel V oder VI ist

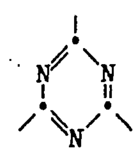
(V),
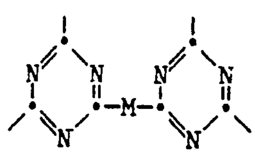
(VI),

A —O— oder $—NR^1—$ bedeutet, $R^1$ Wasserstoff, gegebenenfalls substituiertes $C_1—C_{20}$Alkyl, $C_5—C_9$Cycloalkyl, gegebenenfalls substituiertes Phenyl oder $C_7—C_9$Aralkyl darstellt, X ein di- oder trifunktioneller Rest einer Hydroxy- oder Aminocarbonsäure nach Entfernen der funktionellen Gruppen bedeutet, oder A und X zusammen den Rest einer über das Stickstoffatomen an den Rest Tr gebundenen heterocyclischen Aminocarbonsäure nach dem Entfernen der Carboxylgruppe darstellen,

$R^2$, im Falle von m = 1, eine der Bedeutungen von $R^1$ annimmt oder $R^2$, im Falle von m = 2, ein freies Elektronenpaar darstellt,

R der Rest eines aliphatischen, cycloaliphatischen, aromatischen, araliphatischen oder heterocyclischen Diols nach dem Entfernen der beiden Hydroxylgruppen ist, der gegebenenfalls Susbstituenten trägt, die keine aktiven Wasserstoffatome aufweisen,

Y der Rest einer aliphatischen, cycloaliphatischen, aromatischen, araliphatischen oder heterocyclischen Dicarbonsäure nach dem Entfernen der beiden Carboxylgruppen ist, der gegebenenfalls Substituenten trägt, die keine aktiven Wasserstoffatome aufweisen,

Z eine der Bedeutungen von Y besitzt, aber zusätzlich auch Carbonsäure- oder Sulfonsäurereste als Substituenten tragen kann,

R' der zweiwertige Rest einer aliphatischen, cycloaliphatischen, aromatischen oder araliphatischen Hydroxycarbonsäure nach dem Entfernen der Carboxylgruppe und der Hydroxylgruppe bedeutet,

X' der zwei- oder dreiwertige Rest eines aliphatischen, cycloaliphatischen, aromatischen oder araliphatischen Aminoalkohols nach dem Entfernen der Amino- und der Hydroxylgruppe(n) ist,

n eine ganze Zahl von 0—40 bedeutet, o eine ganze Zahl von 1—40 darstellt, m 1 oder 2 ist, q 0 oder 1 bedeutet und p, abhängig vom Rest Tr, 3 oder 4 bedeutet,

M einen Rest —W—Q—W— bedeutet, worin W —O—, —$NR^1$— oder —$NR^1$—X''—$NR^1$—OC— ist,

X'' der zweiwertige Rest eines aliphatischen, cycloaliphatischen, aromatischen oder araliphatischen Diamins nach dem Entfernen der Aminogruppen ist, und

Q ein zweiwertiger Oligomerrest mit 1 bis 60, vorzugsweise 5 bis 40, Monomereinheiten ist, der ausgewählt ist aus der Gruppe bestehend aus 1,2-Polybutadien, 1,4-Polybutadien, Acrylnitril-Butadien Copolymer, Polyether oder Polydialkylsiloxan, mit der Massgabe, dass bei Vorliegen eines Tr Restes der Formel V die Gruppen R und R' nur aliphatische oder cycloaliphatische Reste sein dürfen und dass die Verbindungen keinen Schmelzpunkt oberhalb von 200°C besitzen, und dass wenigstens einer der Indizes n oder q in Formel II grösser als 0 ist.

$R^1$ und $R^2$ bedeuten als $C_1$—$C_{20}$Alkyl einen Rest mit gerader oder verzweigter, bevorzugt jedoch mit gerader, Alkylkette. Beispiele für solche Reste sind Methyl, Ethyl, n-Propyl, Isopropyl, n-Butyl, sek.Butyl, Pentyl, Hexyl, Octyl, Decyl, Dodecyl, Tetradecyl, Hexadecyl, Octadecyl oder Eicosyl. Als verzweigter Rest kommt auch 2-Ethylhexyl in Frage. $R^1$ oder $R^2$ kann auch substituiertes Alkyl sein. Beispiele für Substituenten sind $C_1$—$C_4$ Alkoxy, Halogen, insbesondere Chlor oder Brom, oder Cyan.

$R^1$ und $R^2$ sind als Alkyl bevorzugt $C_1$—$C_4$Alkyl, ganz besonders bevorzugt Methyl.

Als substituiertes Phenyl bedeuten $R^1$ und $R^2$ beispielsweise Chlorphenyl, Alkylphenyl oder Alkoxyphenyl. Beispiele dafür sind 2-, 3- oder 4-Methylphenyl, 2-, 3- oder 4-Methoxyphenyl oder 2-, 3- oder 4-Chlorphenyl.

Als $C_5$—$C_9$Cycloalkyl bedeuten $R^1$ und $R^2$ beispielsweise Cyclopentyl, Cyclohexyl, Cycloheptyl, Cyclooctyl oder Cyclononyl, besonders bevorzugt jedoch Cyclohexyl. Es kann sich auch um alkylsubstituierte Cycloalkylreste handeln.

Als $C_7$—$C_9$Aralkyl bedeuten $R^1$ und $R^2$ beispielsweise Benzyl, α-Methyl- benzyl oder α,α-Dimethylbenzyl. Bevorzugt wird Benzyl.

$R^1$ und $R^2$ sind vorzugsweise Wasserstoff oder Methyl, ganz besonders jedoch Wasserstoff.

Ist X' ein dreiwertiger Rest eines Aminoalkohols (m = 2), so muss $R^2$ ein freies Elektronenpaar sein.

X als difunktioneller Rest einer Aminocarbonsäure leitet sich beispielsweise ab von α-Aminosäuren, wie Glycin, Alanin oder Phenylalanin (hier ist X also —$CH_2$—, —$CH(CH_3)$— oder —$CH[—CH_2—C_6H_5]$-) oder von α,ω-Aminosäuren, wie β-Alanin, Aminocapronsäure, γ-Aminobuttersäure, p-Aminobenzoesäure oder o-Anthranilsäure. Bilden A und X zusammen den Rest einer heterocyclischen Aminocarbonsäure, so leitet sich diese beispielsweise von Prolin oder Pyroasparginsäure ab. Hier bilden also A und X Rest der Formeln

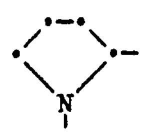 und 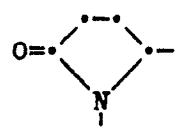 .

X als difunktioneller Rest einer Hydroxycarbonsäure leitet sich beispielsweise ab von α,ω-Hydroxycarbonsäuren, wie Milchsäure, γ-Hydroxybuttersäure, Salicylsäure oder p-Hydroxybenzoesäure (hier ist X also —$CH(CH_3)$—, —$(CH_2)_3$—, o-$C_6H_4$, p-$C_6H_4$). Stellt X einen trifunktionellen Rest einer Amino- oder Hydroxycarbonsäure dar, so leitet sich dieser Rest beispielsweise von Asparginsäure, 3- oder 4-Aminophthalsäure oder von 3- oder 4-Hydroxyphthalsäure ab.

X ist vorzugsweise $C_2$—$C_{20}$Alkylen, das gegebenenfalls $C_1$—$C_4$Alkyl, $C_1$—$C_4$Alkoxy oder Halogen als Substituenten trägt und das gegebenenfalls ethylenisch ungesättigte Kohlenstoffatome enthalten kann. Beispiele für unsubstituiertes gesättigtes X als Alkylen sind Ethylen, Tri-, Tetra-, Penta-, Hexa-, Hepta-, Octa-, Deca-, Dodeca-, Tetradeca-, Hexadeca-, Octadeca- oder Eicosamethylen.

Trägt X Substituenten, so handelt es sich bei $C_1$—$C_4$Alkyl beispielsweise um Methyl, Ethyl, n-Propyl, Isopropyl oder n-Butyl, bevorzugt jedoch um Methyl; bei $C_1$—$C_4$Alkoxy handelt es sich beispielsweise um Methoxy, Ethoxy, n-Propoxy, Isopropoxy oder n-Butoxy, bevorzugt jedoch um Methoxy; bei Halogen handelt es sich beispielsweise um Chlor oder Brom, bevorzugt jedoch um Chlor.

X ist vorzugsweise unsubstituiertes $C_5$—$C_{12}$Alkylen und ganz besonders bevorzugt Penta- oder Dodecamethylen.

Leitet sich R von einem aliphatischen Diol ab, so handelt es sich dabei um geradkettige oder verzweigtkettige Alkylenreste, die gegebenenfalls durch Sauerstoff- oder Schwefelatome unterbrochen sein können, oder die gegebenenfalls ethylenisch ungesättigte Bindungen enthalten, und die gegebenenfalls Substituenten tragen können. Bevorzugt sind unsubstituierte gesättigte, geradkettige $C_2$—$C_{20}$Alkylenreste, wie sie weiter oben beispielhaft für X aufgezählt wurden.

Besonders bevorzugte Reste R sind $C_2$—$C_{12}$Alkylenreste, beispielsweise Ethylen, Tetramethylen, Hexamethylen oder Dodecamethylen.

Das R zugrundeliegende Diol kann aber auch ein Poly-(oxyalkylen)-glykol oder Poly-(thioalkylen)-glykol sein. Bevorzugt sind die sauerstoffhalatigen Derivate. Beispiele dafür sind Poly-(ethylen)-glykol, Poly(propylen)-glykol oder Poly-(butylen)-glykol mit 2—60, bevorzugt 20—40, Monomereinheiten. Leitet sich R von einem cycloaliphatischen Diol ab, so handelt es sich dabei beispielsweise um ein Diol mit einem cycloaliphatischen Ring mit 5—7 Kohlenstoffatomen, der gegebenenfalls Teil einer aliphatischen Kette sein kann oder der gegegebenenfalls Substituenten direkt am Ring trägt. Beispiele für Reste dieses Typs sind Cyclopentylen, Cyclohexylen oder Cycloheptylen. Besonders bevorzugt wird Cyclohexylen, insbesondere das 1,3- oder das 1,4-Cyclohexylen. Ebenfalls von Interesse ist das 1,4-Bis-(cyclohexylen)-methylen.

Leitet sich R von einem aliphatischen Diol mit ethylenisch ungesättigten Bindungen in der Kette ab, so handelt es sich dabei um Derivate von hydroxyl-terminierten Polybutadienen, also um 1,2- oder 1,4-Polybutadienreste, oder um Butadien-Acrylnitril Copolymere. Die Derivate besitzen 1—60, bevorzugt 20—40 Monomereinheiten in der Kette.

Basiert R auf einem aromatischen Diol, so leitet sich dieser Rest bevorzugt von einem ein- oder zweikernigen Phenol ab, ist also insbesondere 1,2-, 1,3- oder 1,4-Phenylen oder 4,4'-Diphenylmethan, 4,4'-Diphenylether oder 4,4'-Diphenylsulfon. Als araliphatischer Rest ist R beispielsweise Xylylen.

Als heterocyclischer Rest leitet sich R beispielsweise von Furan, Pyran oder Pyridin bzw. dessen voll- oder teilhydrierten Derivaten ab, bevorzugt jedoch von Tetrahydrofuran.

R leitet sich bevorzugt von einem aliphatischen oder cycloaliphatischen Diol ab. Ganz besonders bevorzugt ist R der Rest eines Poly-(butylen)-glykols, insbesondere ein Rest mit 9, 12 oder 30 (jeweils Mittelwerte) Oxybutyleneinheiten in der Kette.

Die Rest Y und Z entsprechen in der Regel denen, die weiter oben für R definiert wurden. Sie leiten sich allerdings von Dicarbonsäuren anstelle von Diolen ab. Für eine konkrete Verbindung der Formel I können R, Y und Z im Rahmen der gegebenen Definitionen unterschiedliche Bedeutungen annehmen. Alle drei Typen von Resten R, Y und Z können gegebenenfalls Substituenten tragen, die keine aktiven Wasserstoffatome aufweisen.

Solche Reste sind beispielsweise ausgewählt aus der Gruppe bestehend aus Alkyl, insbesondere Methyl, Alkoxy, insbesondere Methoxy, Halogen, insbesondere Chlor, Cyan, Alkoxycarbonyl, insbesondere Methoxycarbonyl, oder Vinyl.

Falls Z einen Substituenten mit aktiven Wasserstoffatomen trägt, so handelt es sich dabei um Carbonsäure- oder Sulfonsäuregruppen, bevorzugt jedoch um Carbonsäuregruppen.

Die Reste Y und Z leiten sich besonders bevorzugt von aromatischen oder heterocyclischen Dicarbonsäuren ab. Z ist insbesondere ein Derivat der Trimellithsäure.

R' leitet sich von einer Hydroxycarbonsäure ab, während R ein Diol zugrunde liegt. Die nach dem Entfernen der funktionellen Reste zurückbleibende Gruppe R' kann die gleichen Bedeutungen und Bevorzungen besitzen, wie der Rest R, der nach dem Entfernen der beiden funktionellen Hydroxylgruppen des Diols zurückbleibt.

Der Rest X' leitet sich von einem Aminoalkohol mit höchstens einer Aminogruppe ab, während sich der Rest X von einer Amino- oder Hydroxycarbonsäure ableitet. Nach Entfernen der jeweiligen funktionellen Reste bleiben Gruppen zurück, die jeweils als X oder als X' die gleichen Bedeutungen und Bevorzugungen besitzen.

Der Index n beschreibt die Länge der Polyesterkette der Triazinderivate der Formel I oder II dieser Erfindung. Er kann Werte von 0 bis 40, bevorzugt von 0 bis 25, und ganz besonders bevorzugt von 0 bis 10, annehmen.

Der Index o beschreibt die Länge der Polyesterkette der Triazinderivate III oder IV dieser Erfindung. Der Index kann Werte von 1 bis 40 annehmen, bevorzugt Werte von 1 und 25, ganz besonders von 1 bis 10.

Der Index q bestimmt, ob ein carboxyl- oder ein hydroxylterminierter Polyester vorliegt. Er kann Werte von 0 (hydroxyl-terminiert) oder von 1 (carboxyl-terminiert) annehmen.

Der Index m ist, je nach Funktionalität des Restes X oder X', 1 oder 2. Bevorzugt ist m 1.

Der Index p ist, je nachdem, ob ein dreiwertiger Triazinrest der Formel V oder ein vierwertiger Triazinrest der Formel VI vorliegt, 3 oder 4. Vorzugsweise ist p 3.

Die erfindungsgemässen Polyester der Formeln I bis IV müssen eine gewisse Mindestflexibilität und, falls sie kristallin sind, einen Schmelzpunkt von weniger als 200°C aufweisen. Dies wird in der Regel dadurch erreicht, dass die Polyesterketten nur teilweise aus aromatischen Bausteinen bestehen, oder dass Triazinreste der Formel VI mit flexibilisierenden Brücken M als zentrale Gruppen eingesetzt werden. In diesem letzteren Fall können die Polyesterketten an den restlichen vier Valenzen des Bausteins der Formel VI vollständig aus aromatischen Resten bestehen. Das Brückenglied M in der Formel VI ist ein Segment, das sich von oligomeren Butadienen, Acrylnitril-Butadien Copolymeren, Polyethern oder Dialkylsiloxanen ableitet. Diese Oligomeren besitzen zwischen 1 und 60 Monomereinheiten, vorzugsweise 5 bis 40 solcher Einheiten. Die Oligomeren sind über —O— oder —$NR^1$-Brücken, vorzugsweise —NH-Brücken, mit den Triazinkernen verbunden.

Solche Segmente werden über die entsprechenden dihydroxy- oder diamino-terminierten Oligomeren eingeführt; sie können aber auch über die entsprechende dicarboxy-terminierten Oligomeren eingeführt

werden, die mittels eines Diamins in die entsprechenden difunktionellen Aminoamidsäuren übergeführt wurden.

Beispiele für geeignete Acrylnitril-Butadien Copolymerbausteine sind Produkte vom Typ HYCAR® der Fa. Goodrich.

Als Polyether kommen Polyalkylenether in Frage. Diese können hydroxyl-terminiert oder auch aminoterminiert (Jeffamine® der Fa. Texaco) sein. Insbesondere bevorzugt werden hydroxyl- oder amino-terminierte Polyethylen-, Polypropylen- oder Polybutylenglykole. Leitet sich M von Polydialkylsiloxanen ab, so handelt es sich dabei vorzugsweise um $C_1$—$C_4$Polydialkylsiloxane.

Bevorzugt werden Verbindungen der Formeln I und III, worin A —$NR^1$—, und ganz besonders —NH—, bedeutet.

Besonders bevorzugt werden Verbindungen der Formel I, worin Tr ein Rest der Formel V ist, A —NH— bedeutet, X $-(CH_2)_5-$ ist und p 3 ist.

Ebenfalls bevorzugt werden Verbindungen der Formeln I, II, III und IV, worin X, R, Y, X', R' und Z, falls vorhanden, unsubstituierte Reste bedeuten und Z die Bedeutung von Y bestizt, gegebenenfalls aber als zusätzlichen Substituenten mit aktiven Wasserstoffatomen eine Carboxylgruppe trägt.

Gans besonders bevorzugt werden Verbindungen der Formel I, die endständige Carboxylgruppen tragen, und worin n eine ganze Zahl von 1 bis 10, bevorzugt 1 bis 4, bedeutet.

Ganz besonders bevorzugt werden Verbindungen der Formeln I und III, worin A —$NR^1$— ist, $R^1$ Wasserstoff oder $C_1$—$C_4$Alkyl bedeutet, X gegebenenfalls mit $C_1$—$C_4$Alkyl, $C_1$—$C_4$Alkoxy oder Halogen substituiertes $C_2$—$C_{20}$Alkylen ist, R der Rest eines aliphatischen oder cycloaliphatischen Diols nach dem Entfernen der beiden Hydroxylgruppen ist, Y den aromatischen oder heterocyclischen Rest einer Dicarbonsäure nach dem Entfernen der beiden Carboxylgruppen darstellt, Z der Rest einer aromatischen Dicarbonsäure oder Tricarbonsäure nach dem Entfernen der Carboxylgruppen ist, R' der zweiwertige Rest einer aliphatischen oder cycloaliphatischen Hydroxycarbonsäure nach dem Entfernen der funktionellen Gruppen ist, n eine ganze Zahl von 0—10 darstellt, o eine ganze Zahl von 1—10 ist, m 1 bedeutet und p 3 oder 4 ist, worin W —$NR^1$— oder —$NR^1$—X''—$NR^1$—OC— ist, und X'' den Rest eines aliphatischen oder cycloaliphatischen Diamins nach dem Entfernen der funktionellen Gruppen darstellt.

Eine weitere interessierende Untergruppe der Verbindungen der Formeln I und III ist jene, worin A —NH— ist, X —$(CH_2)_r$— bedeutet, r eine ganze Zahl von 5 bis 12 ist, insbesondere 5 ist, R einen aliphatischen oder cycloaliphatischen Rest eines Diols nach dem Entfernen der beiden Hydroxylgruppen darstellt, R' der aliphatische Rest einer Hydroxycarbonsäure nach Entfernen der funktionellen Gruppen ist, Y den aliphatischen oder aromatischen Rest einer Dicarbonsäure nach dem Entfernen beider Carboxylgruppen darstellt, Z eine der Bedeutungen von Y besitzt und gegebenenfalls als Substituenten eine zusätzliche Carboxylgruppe tragen kann, n 0—4 bedeutet, o 1—4 ist und m 1 darstellt.

Ganz besonders interessieren Verbindungen der Formeln I und II worin R sich ableitet von Ethylenglykol, Propylenglykol, Butandiol-1,4, Neopentylglykol, Hexandiol-1,6, Dodecandiol-1,12, Polyethylenglykol, Polypropylenglykol, Polybutylenglykol, Polyhexamethylenglykol und Cyclohexandimethanol-1,4, und worin Y sich ableitet von Bernstein-, Glutar-, Adipin-, Sebazin- oder Azelainsäure sowie von dimeren Fettsäuren, Phthalsäure, Iso- oder Terephthalsäure, worin m 1 ist, und Z sich von einer der unter Y erwähnten Dicarbonsäuren ableitet oder von Trimellith- oder Trimesinsäure, insbesondere jedoch von Trimellithsäure.

Ebenfalls bevorzugt werden Verbindungen der Formel I, worin Tr ein Rest der Formel V ist, A —NH— bedeutet, X —$(CH_2)_r$— darstellt, r eine ganze Zahl von 5 bis 12 ist, insbesondere 5 bedeutet, R sich ableitet von einem $C_2$—$C_6$ aliphatischen Diol oder von Polyethylenglykol, Polypropylenglykol oder Polybutylenglykol mit 3 bis 30 Oxyalkyleneinheiten.

Y sich ableitet von Bernstein-, Adipin-, Sebazin- oder Azelainsäure, Z eine der für Y definierten Bedeutungen annimmt oder sich ableitet von Phthal-, Isophthal-, Terephthal-, Trimellith- oder Trimesinsäure, insbesondere jedoch von Trimellithsäure, m 1 ist, p 3 bedeutet und n eine ganze Zahl von 0 bis 10 ist. Ganz besonders bevorzugt werden Verbindungen der Formel I, worin Tr ein Rest der Formel V ist, A —NH— bedeutet, X $-(CH_2)_5-$ darstellt, R sich ableitet von Hexandiol-1,6, Neopentylglykol oder von Gemischen beider Alkohole, Y sich ableitet von Terephthalsäure, Z sich ableitet von Trimellithsäure, m 1 ist, n eine ganze Zahl von 1 bis 10 ist, und q 1 bedeutet.

Die Verbindungen der Formel I bis IV besitzen in der Hauptsache sternförmige Strukturen, wobei jeweils 3*m oder 4*m (also vorzugsweise 3—8) funktionelle Endgruppen pro Molekül vorhanden sind. Diese Endgruppen ihrerseits können einen oder mehrere funktionelle Reste, wie beispielsweise Carboxylgruppen tragen. In der Regel findet keine dreidimensionale Vernetzung der Verbindungen der Formeln I bis IV über diese Endgruppen statt; eine solche Vernetzung würde die Bildung eines Makrogels bewirken. Dock kann es vorkommen, dass ein geringer Anteil der Polyestersterne über ihre Endgruppen miteinander verknüpft sind. Solche Strukturen fallen ebenfalls unter den Rahmen dieser Erfindung.

Die Verbindungen der Formeln I lassen sich herstellen, indem man
a) die Carbonsäure der Formel VII oder VIII oder eines ihrer funktionalisierten Derivate

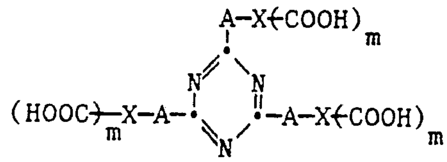

(VII),

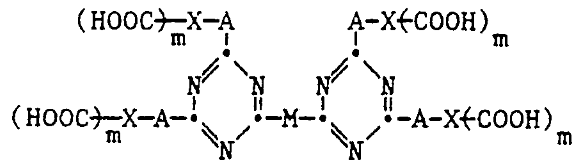

(VIII)

mit b) im Falle der Carbonsäure VII, mindestens der 3*m-fachen molaren Menge des Diols der Formel IX, oder, im Falle der Carbonsäure VIII, mindestens der 4*m fachen molaren Menge des Diols der Formel IX oder eines seiner funktionalisierten Derivate

$$HO—R—OH \qquad (IX)$$

und gegebenenfalls mit
c) der Dicarbonsäure der Formel X oder einem ihrer funktionalisierten Derivate

$$HOOC—H—COOH \qquad (X)$$

umsetzt, wobei die Reste M, A, R, X und Y sowie der Index m die weiter oben definierte Bedeutung besitzen.

Unter den funktionalisierten Derivaten der Carbonsäuren der Formeln VII, VIII und X versteht man ein reaktives Derivat, das zur Umsetzung mit dem Diol der Formel IX oder einem funktionalisierten Derivat davon geeignet ist, beispielsweise ein Carbonsäurechlorid oder einen Ester.

Unter einem funktionalisierten Derivat des Diols der Formel IX versteht man ein reaktives Derivat, das zur Umsetzung mit einer Carbonsäure, bzw. einem Carbonsäurederivat unter Ausbildung einer Estergruppe umsetzbar ist.

Ein reaktives Derivat des Diols der Formel IX ist beispielsweise ein Diacetat dieses Diols.

Sollen carboxyl-terminierte Ester der Formel I hergestellt werden, so werden die molaren Mengen der Komponenten der Formel VII (oder VIII) und IX und der Formel X so gewählt, dass auf jede Carbonsäuregruppe bzw. deren reaktive Vorstufe ein Unterschuss an Hydroxylgruppen des Diols kommt. Wünscht man hydroxyl-terminierte Ester der Formel I, so wird entsprechend ein Ueberschuss an Diol IX eingesetzt. Je nach Mengenverhältnis von Carbonsäure VII (oder VIII) und Diol IX und Carbonsäure X kann die Kettenlänge des entstehenden Polyesters der Formel I variiert werden. Die Abhängigkeit der Kettenlänge des Polyesters von den Mengenverhältnissen Diol/Carbonsäure ist dem Fachmann an sich bekannt oder kann mittels Routineversuchen bestimmt werden.

Wie bereits erwähnt entstehen durch die Kondensation im wesentlichen sternförmige Polyester, da die Polykondensation vorzugsweise an den wachsenden linearen Polyesterketten stattfindet und überraschenderweise wenige Vernetzungsreaktionen durch die trifunktionelle Triazinkomponente induziert werden.

Die Erfindung betrifft daher auch ein Verfahren zur Herstellung der Polyester der Formel I, wie oben skizziert.

Zur Herstellung der carboxylgruppen-terminierten Polyester der Formel I setzt man pro molarem Anteil der Carbonsäure der Formel VII oder VIII vorzugsweise (3—40)*m oder (4—40)*m molare Anteile des Diols der Formel IX und (3—40)*m oder (4—40)*m molare Anteile der Dicarbonsäure der Formel X gemeinsam um, wobei das molare Verhältnis der Carboxylgruppen zu den Hydroxylgruppen 1,01:1 bis 1,5:1, vorzugsweise 1,1:1 bis 1,5;1 beträgt. Das Gleiche gilt für Umsetzungen, in denen funktionalisierte Derivate der Carbonsäuren anstelle der reinen Säuren eingesetzt werden.

Sollen hydroxylgruppen-terminierte Produkte der Formel I hergestellt werden, so setzt man bevorzugt die oben erwähnten molaren Anteile von VII, (VIII), IX und X um. Nur beträgt das molare Verhältnis der Carboxylgruppen zu den Hydroxylgruppen jetzt 0,6:1 bis 0,99:1, vorzugsweise 0,9:1 bis 0,99:1.

Die Herstellung der Verbindungen der Formel I, in denen Z ein Rest mit zusätzlichen Carbonsäure- oder Sulfonsäureresten ist oder sich von Y unterscheidet, erfolgt in zwei Stufen.

Zuerst wird ein hydroxylgruppen-terminierter Polyester der Formel I hergestellt wie oben beschrieben, und anschliessend erfolgt eine weitere Umsetzung mit einer Di- oder Polycarbonsäure der Formel $HOOC—Z(COOH)_b$ ($b \geq 1$; bevorzugt 1 oder 2) oder einem ihrer funktionalisierten Derivate; besonders bevorzugt erfolgt die weitere Umsetzung mit Trimellithsäure oder Trimellithsäureanhydrid.

Eine besonders bevorzugte Ausführungsform der Herstellung der Verbindungen der Formel I, die ebenfalls zur vorliegenden Erfindung zählt, ist dadurch gekennzeichnet, dass man

a) einen hydroxyl-terminierten Polyester durch Ver- oder Umesterung herstellt,

b) diesen mit einem halben COOH-Aequivalent der Verbindung der Formel VII oder VIII umsetzt, bis die Säurezahl des Reaktionsgemisches weniger als 5 mg KOH/g beträgt, und

c) gegebenenfalls die verbleibenden Hydroxylgruppen mit dem entsprechenden moldaren Anteil einer Di- oder Tricarbonsäure oder eines ihrer funktionalisierten Derivate, bevorzugt mit Trimellithsäure, umsetzt, bis die Säurezahl des Reaktionsgemisches weniger als 100 mg KOH/g beträgt.

Die Polyesterharze der Formel I können durch allgemeine Arbeitsweisen, die bei der Herstellung linearer Polyesterharze Anwendung finden, hergestellt werden. So kann man zweckmässigerweise die Veresterung durch Schmelzkondensation der Carbonsäurekomponente(n) und des Diols durchführen. Die Reaktionsteilnehmer werden dabei beispielsweise unter Rühren biz zu einer Temperatur von 240°C erhitzt. Dabei kann es sich anbieten, ein inertes Gas, wie beispielsweise Stickstoff, durch die Reaktionsmischung zu leiten, um das während der Veresterungsreaktion gebildete Wasser oder den niedrigen Alkohol, wenn ein Ester als funktionalisiertes Carbonsäurederivat eingesetzt wurde, zu entfernen. Auch kann am Ende der Veresterungsreaktion gegebenenfalls ein leichtes Vakuum angelegt werden, um restliche niedermolekulare Spaltprodukte zu isolieren.

Der bevorzugte Temperaturbereich der Schmelzkondensation beträgt 190—220°C.

Die Verbindungen der Formel III lassen sich dadurch erhalten, indem man

a) eine Carbonsäure der Formel VII oder VIII oder eiones ihrer funktionalisierten Derivate

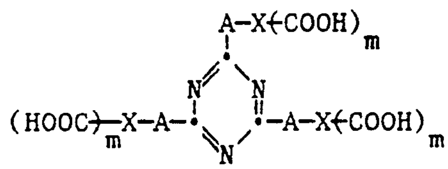

(VII),

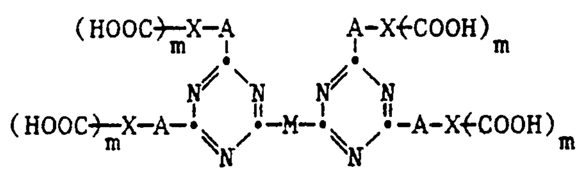

(VIII)

mit b) im Falle der Carbonsäure VII oder des entsprechenden funktionalisierten Derivates, mindestens der 3*m fachen molaren Menge der Hydroxycarbonsäure der Formel XI, oder im Falle der Carbonsäure VIII oder des entsprechend funktionalisierten Derivates, mindestens der 4*m fachen molaren Menge der Hydroxycarbonsäure der Formel XI oder eines ihrer funktionalisierten Derivate

$$HO—R'—COOH \qquad (XI),$$

umsetzt; dabei besitzen die Reste A, X, M und R' sowie der Index m die weiter oben definierte Bedeutung.

Zur Herstellung der Verbindungen der Formel II verwendet man zweckmässigerweise Triazinpolyole der Formel XII oder XIII

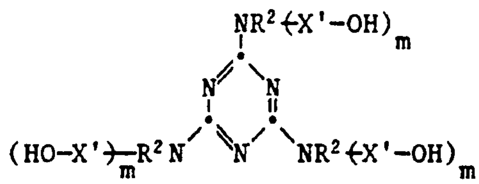

(XII),

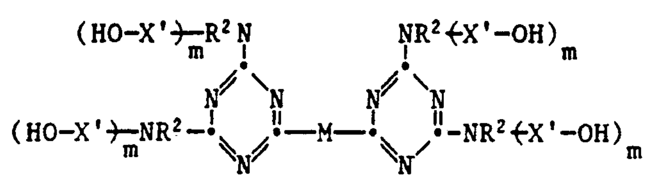

(XIII),

und setzt diese mit, im Falle des Polyols XII, mindestens der 3*m fachen molaren Menge der Dicarbonsäure der Formel X, oder, im Falle des Polyols XIII, mit mindestens der 4*m fachen molaren Menge der Dicarbonsäure der Formel X oder eines ihrer funktionalisierten Derivate

$$HOOC—Y—COOH \qquad (X)$$

und gegebenenfalls mit dem Diol der Formel IX oder einem seiner funktionalisierten Derivate

$$HO—R—OH \quad (IX)$$

um und verestert ein hydroxyl-terminiertes Reaktionsprodukt anschliessend gegebenenfalls mit der Polycarbonsäure $HOOC—Z+COOH)_b$ ($b \geq 1$, bevorzugt 1 oder 2); dabei haben die Reste M, X', $R^2$, R, Y und Z sowei der Index m die weiter oben definierte Bedeutung. Wünscht man Verbindungen der Formeln IV, so setzt man die oben definierten Polyole XII oder XIII mit, im Falle des Polyols XII, mindestens der 3*m fachen molaren Menge der Hydroxycarbonsäure der Formel XI, wie oben definiert, oder, im Falle des Polyols XIII, mindestens der 4*m fachen molaren Menge der Hydroxycarbonsäure XI, wie oben definiert, um und verestert das hydroxyl-terminierte Reaktionsprodukt anschliessend gegebenenfalls mit der Polycarbonsäure $HOOC—Z(COOH)_b$ ($b \geq 1$, bevorzugt 1 oder 2); dabei besitzen die Reste M, X', $R^2$, R' und Z sowie der Index m die bereits oben angegebene Bedeutung.

Die Diole IX, die Dicarbonsäuren X und die Hydroxycarbonsäuren XI sind an sich bekannte Verbindungen und teilweise im Handel erhältlich. Falls nicht käuflich, lassen sie sich jedoch nach bekannten Reaktionen synthetisieren.

Die Carbonsäuren der Formel VII lassen sich durch Umsetzung von Cyanurchlorid mit Hydroxycarbonsäuren oder mit Aminocarbonsäuren in an sich bekannter Weise herstellen. Falls gewünscht, lassen sich die Carbonsäuren der Formel VII anschliessend in funktionalisierte Derivate, wie Ester oder Säurechloride, überführen. Verbindungen der Formel VII sind beispielsweise in der US—PS 4,402,907 beschriebenen.

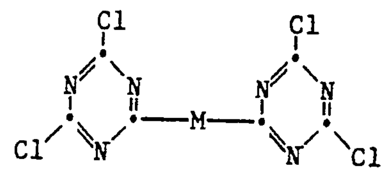

(XIV)

mit Amino- oder Hydroxycarbonsäuren bzw. mit Aminoalkoholen herstellen.

Verbindungen der Formel XIV erhält man durch Umsetzung von amino- oder hydroxy-terminierten Oligomeren, wie oben für den Rest M definiert, mit Cyanurchlorid.

Die Reaktion lässt sich bekanntermassen so steuern, dass lediglich ein Chloratom pro Cyanurchlorideinheit ausgetauscht wird.

Die hydroxy- oder amino-terminierten Oligomeren, die zur Bildung der Brücke M führen, sind im Handel erhältlich oder können, durch an sich bekannte Verfahren aus käuflichen carboxyl-terminierten Oligomeren in amino-terminierte Verbindungen übergeführt werden. Beispielsweise kann man carboxylterminierte Oligomere, z.B. Polybutadiene, durch Umsetzung mit Diaminen, in Aminoamidsäuren umwandeln.

Die erfindungsgemässen Polyester lassen sich vielseitig einsetzen. Beispielsweise können hydroxyl- oder carboxyl-endgruppenhaltige Triazinderivate dieser Erfindung als Gemisch oder in Kombination mit anderen Polyestern als Schmelzkleber eingesetzt werden. Auch sind die erfindungsgemässen Polyester als Härter für Verbindungen einsetzbar, die durch carboxylgruppen- oder durch hydroxylgruppenhaltige Verbindungen vernetzt werden können.

Insbesondere die sternförmige Struktur in Kombination mit den flexiblen Molekülteilen ist als vorteilhaft anzusehen. So finden die hydroxylgruppen-terminierten Polyester der Formeln I, II und IV, besonders die carboxylgruppen-terminierten Polyester der Formeln I, II, III und IV Anwendung als Härter für Harze, die mindestens eine 1,2-Epoxidgruppe im Molekül enthalten.

So hat sich überraschenderweise gezeigt, dass die erfindungsgemässen triazinhaltigen Härter eine beschleunigte Härtungsreaktion hervorrufen, verglichen mit entsprechenden Polyesterhärtern, denen der Triazinbaustein fehlt. Man kann hier also die Härtung bei reduzierten Temperaturen durchführen.

Die vorliegende Erfindung betrifft daher auch Zusammensetzungen enthaltend

a) ein Harz enthaltend mindestens eine 1,2-Epoxidgruppe im Molekül und

b) eine Verbindung der Formeln I, II, III oder IV, wie oben definiert.

Solche Zusammensetzungen lassen sich vorteilhafterweise als Klebstoffe oder als Lacke einsetzen.

Die Erfindung betrifft daher auch die Verwendung der oben definierten Zusammensetzungen als Klebstoffe oder als Lacke.

Ferner betrifft die Erfindung die Verwendung der Verbindungen der Formeln I, II, III oder IV als Komponenten von Schmelzklebern.

Besonders bevorzugt setzt man die carboxyl-terminierten Polyester der Formeln I bis IV als Komponenten in Pulverlacken ein. Die Verwendung von Polyestern in Pulverlacken ist an sich bekannt und z.B. in den DE—OSS 2,838,841 und 2,163,962 und in der US—PS 3,397,254 beschrieben.

Die vorliegende Erfindung betrifft also auch Pulverlacke enthaltend carboxyl-terminierte Polyester der Formeln I, II, III oder IV, sowie die Verwendung dieser Verbindungen in Pulverlacken.

Als Epoxidharz der Komponente a) mit durchschnittlich mehr als einer Epoxidgruppe im Molekül, die

in den erfindungsgemässen härtbaren Gemischen eingesetzt werden, seien insbesondere genannt:

Alicyclische Polyepoxide, wie Vinylcyclohexendiepoxid, Limonendiepoxid, Dicyclopentadiendiepoxid, Bis-(2,3-epoxycyclopentyl)-ether, Bis-(3,4-epoxycyclohexylmethyl)-adipat, (3',4'-Epoxycyclohexylmethyl)-3,4-epoxycyclohexancarboxylat, 3-(Glycidyloxyethoxyethyl)-2,4-dioxaspiro-(5,5)-8,9-epoxyundecan;

Di- oder Polyglycidylether von mehrwertigen aliphatischen Alkoholen, wie 1,4-Butandiol, oder Polyalkylenglykolen, wie Polypropylenglykole; Di- oder Polyglycidylether von cycloaliphatischen Polyolen, wie 2,2-Bis-(4-hydroxycyclohexyl)-propan;

Di- oder Polyglycidylether von mehrwertigen Phenolen, wie Resorcin, Bis-(4-hydroxyphenyl)-methan (= Bisphenol F), 2,2-Bis-(4-hydroxyphenyl)-propan (= Bisphenol A) oder 2,2-Bis-(3,5-dibrom-4-hydroxyphenyl)-propan (= Tetrabrom-Bisphenol A).

Polyepoxide auf der Basis von Novolaken, besonders Phenol-Formaldehyd-oder Kresol-Formaldehyd-Novolaken;

Polyglycidylester von mehrwertigen Carbonsäuren, wie Phthalsäure, Terephtalsäure oder Hexahydrophthalsäure;

N-glycidylderivate von Aminen, Amiden und heterocyclischen Stickstoffbasen, wie N,N-Diglycidylanilin, N,N-Diglycidyl-toluidin, Triglycidylisocyanurat oder N,N,N',N'-Tetraglycidyl-bis-(p-aminophenyl)-methan oder Triglycidylaminophenol.

Es können auch Gemische verschiedener Epoxidharze verwendet werden. Die verwendeten Epoxidharze können fest oder flüssig sein, sind jedoch bevorzugt fest. Das Epoxidäquivalentgewicht der verwendeten Epoxidharze liegt vorteilhafterweise im Bereich von 150 g/Val bis 2500 g/Val, bevorzugt im Bereich von 500 bis 2000 g/Val.

Die Mengen des Epoxidharzes (a) und des Polyesters (b) der erfindungsgemässen Zusammensetzungen werden vorzugsweise so gewählt, dass das Verhältnis der Carboxyäquivalente des Polyesters (b) zu den Epoxidäquivalenten des Epoxidharzes (a) zwischen 0,5 und 1,5 liegt. Selbstverständlich können die erfindungsgemässen härtbaren Zusammensetzungen auch noch zusätzliche dem Fachmann bekannte Härter enthalten, wie z.B. aliphatische, cycloaliphatische, aromatische und heterocyclische Amine, wie Bis-(4-aminophenyl)-methan, Anilin-Formaldehyd-Harze, Bis-(4-aminophenyl)-sulfon, Propan-1,3-diamin, Hexamethylendiamin, Diethylentriamin, Triethylentetramin, 2,2,4-Trimethylhexan-1,6-diamin, m-Xylylendiamin, Bis-(4-aminocyclohexyl)methan, 2,2-Bis-(4-aminocyclohexyl)-propan und 3-Aminomethyl-3,5,5-trimethylcyclohexylamin (Isophorondiamin); Polyaminoamide, wie beispielsweise solche aus aliphatischen Polyaminen und dimerisierten oder trimerisierten Fettsäuren; Polyphenole, wie Resorcin, Hydrochinon, 2,2-Bis(4-hydroxyphenyl)propan (Bisphenol A) und Phenol-Aldehyd-Harz; Polythiole, wie die im Handel unter der Bezeichnung "Thiokole®" erhältlichen Polythiole; Polycarbonsäuren und ihre Anhydride, wie z.B. Phthalsäureanhydrid, Tetrahydrophthalsäureanhydrid, Hexahydrophthalsäureanhydrid, Hexachlorendomethylentetrahydrophthalsäureanhydrid, Pyromellitsäureandianhydrid, Benzophenon 3,3',4,4'-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris-(dimethylaminoethyl)-phenol]; Imidazole oder Mannichbasen; Alkalimetallalkoholate (z.B. Na-Alkoholat von 2,4-Dihydroxy-3-hydroxymethylpentan); Zinnsalze von Alkansäuren (z.B. Zinnoctanoat); Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden; sowie substituierte Cyanamide, wie Dicyandiamid.

Die Härtung kann bei tieferen oder bei höheren Temperaturen vorgenommen werden. Die Härtung kann gewünschtenfalls auch in zwei Stufen vorgenommen werden, indem man z.B. den Härtungsvorgang unterbricht oder, falls man ein Härtungsmittel für höhere Temperaturen einsetzt, die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Die erfindungsgemässen härtbaren Mischungen können ferner noch Plastifizierungsmittel, wie Dibutylphthalat, Dioctylphthalat oder Trikresylphosphat, oder Additive erhalten, wie Streckmittel, Füllstoffe, Verstärkungsmittel, Färbemittel, Fliessmittel und Formtrennmittel. Geeignete Streckmittel, Füllstoffe und Verstärkungsmittel sind beispielsweise Asbest, Asphalt, Bitumen, Glasfasern, Textilfasern, Kohlenstoff- oder Borfasern, Glimmer, Tonerde, Gips, Titandioxid, Kreide, Quarzmehl, Cellulose, Kaolin, gemahlener Dolomit, Wollastonit, Kieselerde mit grosser spezifischer Oberfläche (erhältlich unter dem Handelsnahmen "Aerosil®"), mit langkettigen Aminen modifizierte Tonerde (erhältlich unter dem Handelsnahmen "Bentone®"), gepulvertes Polyvinylchlorid, Polyolefin oder Aminoplaste, Metallpulver, wie Aluminium- oder Eisenpulver. Flammschutzmittel, wie Antimontrioxid, können ebenfalls den härtbaren Mischungen zugegeben werden.

Falls die erfindungsgemässen Stoffgemische als Pulverlacke verwendet werden, können den Pulverlacken noch weitere in der Lackindustrie übliche Zusätze, wie beispielsweise Lichtschutzmittel, und insbesondere Entgasungsmittel, Verlaufsmittel und/oder Pigmente beigegeben werden.

Verlaufsmittel sind z.B. Polyvinylacetale, wie Polyvinylbutyral ("Movital®" B 30 H der Fa. HOECHST), Polyethylenglylkol, Polyvinylpyrrolidon, Glycerin, Acryl-Mischpolymerisate, wie "Modaflow®" oder "Acrylron®" MFP der Fa. Monsanto bzw. der Fa. PROTEX, sowie "Acronal®" 4f der Fa. BASF und "Uresin®

B" der Fa. HOECHST (ein Carbamidsäureharz aus Butylurethan und Formaldehyd). Als Entgasungsmittel wird vorzugsweise Benzoin eingesetzt.

Die Pulverlacke können durch einfaches Mischen der Bestandteile, z.B. in einer Kugelmühle, hergestellt werden. Eine bessere Möglichkeit der Herstellung besteht darin, dass man die Bestandteile zusammen schmilzt, vorzugsweise in einem Extruder oder in einem kontinuierlichen Kneter und dann die abgekühlte Masse zerkleinert. Die Mischungen weisen vorzugsweise eine Partikelgrösse im Bereich von 0,015 bis 500 µm, und insbesondere von 10—75 µm, auf.

Gegenstand der Erfindung ist auch die Verwendung des erfindungsgemässen Stoffgemisches zur Herstellung von vernetzten Produkten.

Dabei wird das Stoffgemisch z.B. auf den zu beschichtenden Gegenstand appliziert und auf mindestens 120°C, vorzugsweise auf 150 bis 250°C, erhitzt, um das Harz auszuhärten.

Die Erfindung betrifft auch Formteile und Ueberzüge, hergestellt durch Härtung des erfindungsgemässen Stoffgemisches.

## HERSTELLUNGSBEISPIELE

### Beispiel 1

Man erhitzt ein Gemisch aus 156 g 2,4,6-Triscarboxypentylamino-1,3,5-triazin (1/3 mol), 118,18 g Hexandiol-1,6 und 188 g Hexandiol-1,6 und 188 g Azelainsäure innerhalb von 190 min auf 220°C. Bei 150°C beginnt Wasser abzudestillieren. Nachd 4,5 Stunden beträgt die Säurezahl 72,2 mg KOH/g, nach 10 Stunden 41,2 mg KOH/g und nach total 15 Stunden ist sie kleiner als 1 mg KOH/g.

Man erhält nach dem Abkühlen 350 g (95,6% d.Th.) eines halbfesten hellbraunen Esterharzes mit folgenden Analysedaten.

| | berechnet für $C_{66}H_{114}N_6O_{18}$ | gefunden |
|---|---|---|
| % C | 61,95 | 62,18 |
| % H | 8,98 | 8,94 |
| % N | 6,97 | 6,47 |
| $\overline{M}n$ | — | 1937 |
| $\overline{M}w$ | — | 4977 |

### Beispiel 2

Man erhitzt unter Rühren in $N_2$-Atmosphäre

776,5 g Dimethylterephthalat,
132,9 g Hexandiol-1,6,
351,5 g Neopentylglykol und
3,5 g Zinkacetat

auf 170°c. Es beginnt Methanol abzudestillieren. Man steigert im Verlauf von 5 Stunden die Temperatur auf 210°C, wobei 295 ml Methanol abdestillieren, welche 91,24% des erwarteten Volumens entsprechen. Man erhält ein hellgelbes Festharz mit 1,70% Hydroxylgruppen, was der Theorie entspricht.

Danach setzt man 78,5 g 2,4,6 Triscarboxypentylamino-1,3,5-triazin zu und kondensiert weitere 4,25 Stunden bei 205°C. Danach ist die Säurezahl kleiner als 1 mgKOH/g. Man setzt 96,1 g Trimellitsäureanhydrid und 3,4 ml Benzyldimethylamin zu. Nach 3 Stunden bei 230°C erhält man 1132 Teile eines hellbraunen Festharzes mit folgenden Eigenschaften:

| Säurezahl: | 72,7 mg KOH/g |
|---|---|
| Glasumwandlungstemperatur: | 50,5°C |
| Erweichungspunkt (Kofler): | 75,0°C |
| $\overline{M}n$: | 4120 |
| $\overline{M}w$: | 9750 |
| mittlere Funktionalität (COOH): | 5,3 |

Beispiel 3

Man erhitzt unter Rühren in einer Stickstoffatmosphäre ein Gemisch aus 78,1 g (0.33 mol) 2,4,6-Triscarboxypentylamino-1,3,5-triazin, 75,0 g (0,50 mol) Triethylenglykol und 101 g (0,50 mol) Sebazinsäure innerhalb von 60 Minuten auf 220°C. Bei 150°C beginnt Wasser abzudestillieren. Nach 5 Stunden wird abkühlen gelassen und man erhält 223 g (98,6% d.Th.) eines hochviskosen leicht gelblichen Polyesterharzes mit den folgenden Analysendaten:

| | berechnet für $C_{69}H_{120}N_6O_4$ | gefunden |
|---|---|---|
| % C | 58,46 | 58,27 |
| % H | 8,53 | 8,57 |
| % N | 5,93 | 5,90 |
| $\overline{Mn}$ | 1416 | 1560 |
| $\overline{Mw}/\overline{Mn}$ | — | 3,3 |
| Säurezahl (mg KOH/g) | 118 | 138 |

Beispiel 4

Man erhitzt unter Rühren in einer Stickstoffatmosphäre ein Gemisch aus 60 g (0,128 mol) 2,4,6-Triscarboxypentylamino-1,3,5-triazin, 57,6 g (0,384 mol) wasserfreiem Triethylenglykol und 63,76 g (0,384 mol) Phthalsäure innerhalb von 1 Stunde auf 210°C, destilliert das Wasser ab und rührt weitere 5 Stunden bei 210°C. Nach dem Abkühlen isoliert man 149 g (90,3 % d.Th.) eines sehr viskosen leicht gelblichen Esterharzes mit den folgenden Analysendaten:

| | berechnet für $C_{63}H_{84}O_{24}N_6$ | gefunden |
|---|---|---|
| % C | 57,79 | 57,13 |
| % H | 6,47 | 6,73 |
| % N | 6,42 | 6,55 |
| $\overline{Mn}$ | 1308 | 709 |
| $\overline{Mw}/\overline{Mn}$ | | 2,8 |
| Säurezahl (mgKOH/g) | 128 | 149 |
| Tg (°C) | | −2 |

Beispiel 5

Man erhitzt unter Rühren in einer Stickstoffatmosphäre ein Gemisch aus 156 g (0,33 mol) 2,4,6-Tricarboxypentylamino-1,3,5-triazin, 120,4 g (1,00 mol) 1,6-Hexandiol und 202,0 g (1,00 mol) Sebazinsäure innerhalb von 90 Minuten auf 220°C und rührt 5 Stunden bei dieser Temperatur, wobei Wasser abdestilliert. Nach Abkühlen isoliert man 420 g (99% d.Th) eines halbfesten leicht gelblichen Polyesterharzes mit den folgenden Analysendaten:

| | berechnet für $C_{69}H_{120}N_6O_{18}$ | gefunden |
|---|---|---|
| % C | 62,70 | 62,82 |
| % H | 9,15 | 9,14 |
| % N | 6,36 | 6,30 |
| $\overline{M}n$ | 1320 | 3930 |
| $\overline{M}w/\overline{M}n$ | — | 3,8 |
| Säurezahl (mgKOH/g) | 127 | 146 |
| Tg (°C) | | 45 |

Beispiel 6

Man erhitzt unter Rühren in einer Stickstoffatmosphäre ein Gemisch aus 156 g (0,33 mol) 2,4,6-Triscarboxypentylamino-1,3,5-triazin, 118 g (1,00 mol) 1,6-Hexandiol und 166 g (1,00 Mol) Isophthalsäure innerhalb von 90 Minuten auf 212°C und rührt weitere 5 Stunden bei 215°C. Nach dem Abkühlen isoliert man 363,7 g (89,9% d.Th.) eines festen Polyesterharzes, dessen Erweichungstemperatur auf einer Kofler Bank zu 77°C bestimmt wird. Es werden folgende Analysendaten gefunden:

| | berechnet für $C_{63}H_{84}O_{18}N_6$ | gefunden |
|---|---|---|
| % C | 62,36 | 61,92 |
| % H | 6,98 | 7,04 |
| % N | 6,93 | 6,94 |
| $\overline{M}n$ | 1212 | 908 |
| $\overline{M}w/\overline{M}n$ | | 3,1 |
| Säurezahl (mgKOH/g) | 138 | 132 |
| Tg (°C) | | 25 |

Beispiel 7

Man erhitzt unter Rühren in einer Stickstoffatmosphäre 156,0 g (0,33 mol) 2,4,6-Triscarboxypentylamino-1,3,5-triazin, 104 g (1,00 mol) Neopentylglykol und 146 g (1,00 Mol) Adipinsäure innerhalb von 60 Minuten auf 225°C und rührt 5 Stunden bei 225°C, wobei Wasser abdestilliert. Nach dem Abkühlen isoliert man 338,8 g (91,5% d.Th.) eines halbflüssigen leicht gelblichen Polyesterharzes mit den folgenden Analysendaten

| | berechnet für $C_{54}H_{90}O_{18}N_6$ | gefunden |
|---|---|---|
| % C | 58,36 | 58,45 |
| % H | 8,16 | 8,13 |
| % N | 7,56 | 7,92 |
| $\overline{M}n$ | 1110 | 1509 |
| $\overline{M}w/\overline{M}n$ | | 3,7 |
| Säurezahl (mgKOH/g) | 151 | 146 |
| Säurezahl (mgKOH/g) | 151 | 146 |
| Tg (°C) | | −6 |

Beispiel 8

Man erhitzt unter Rühren in einer Stickstoffatmosphäre ein Gemisch aus 156 g (0,33 mol) 2,4,6-Triscarboxypentylamino-1,3,5-triazin, 292 g (2 mol) Adipinsäure und 208 g (2 mol) Neopentylglykol innerhalb von 90 Minuten auf 220°C und rührt weitere 5 Stunden bei 220°C. Nach dem Abkühlen isoliert man 545 g (99% d.Th.) eines hochviskosen leicht gelblichen Polyesterharzes mit den folgenden Analysendaten

| | berechnet für $C_{87}H_{129}O_{33}N_6$ | gefunden |
|---|---|---|
| % C | 58,54 | 59,08 |
| % H | 7,23 | 8,17 |
| % N | 4,70 | 4,89 |
| $\overline{M}n$ | 1785 | 1843 |
| $\overline{M}w/\overline{M}n$ | | 4,4 |
| Säurezahl (mgKOH/g) | 94 | 135 |
| Tg (°C) | | −20 |

Beispiel 9

Man erhitzt unter Rühren in einer Stickstoffatmosphäre ein Gemisch aus 156 g (0,33 mol) 2,4,6-Triscarboxypentylamino-1,3,5-triazin, 146,1 g (1,00 Mol) Adipinsäure und 150,1 g (1,00 Mol) Triethyenglykol innerhalb von 60 Minuten auf 225°C und rührt weitere 5 Stunden bei 225°C, wobei Wasser abdestilliert. Nach Abkühlen isoliert man 389,6 g (93,5% d.Th.) eines hochviskosen leicht gelblichen Polyesterharzes mit folgenden Analysendaten:

| | berechnet für $C_{57}H_{96}O_{24}N_6$ | gefunden |
|---|---|---|
| % C | 54,80 | 54,54 |
| % H | 7,75 | 7,78 |
| % N | 6,73 | 6,89 |
| $\overline{M}n$ | 1248 | 1108 |
| $\overline{M}w/\overline{M}n$ | | 4,6 |
| Säurezahl (mgKOH/g) | 134 | 130 |
| Tm (°C) | | 60 |

Beispiel 10

Man erhitzt unter Rühren in einer Stickstoffatmosphäre 97,86 g (0,209 mol) 2,4,6-Triscarboxypentylamino-1,3,5-triazin, 91,7 g (0,627 mol) Adipinsäure und 400 g Polytetrahydrofuran (OH Zahl = 176) innerhalb von 90 min auf 220°C, rührt weitere 5 Stunden bei 220°C, wobei Wasser abdestilliert. Nach dem Abkühlen isoliert man 524 g (92,2% d.Th.) eines hochviskosen leich gelblichen Polyesterharzes mit folgenden Analysendaten:

| | berechnet für $C_{144}H_{276}N_6O_{42}$ | gefunden |
|---|---|---|
| % C | 62,58 | 62,83 |
| % H | 10,06 | 9,70 |
| % N | 3,03 | 3,04 |
| $\overline{M}n$ | 2764 | 3130 |
| $\overline{M}w/\overline{M}n$ | | 5,4 |
| Säurezahl (mg KOH/g) | 59,5 | 62 |
| Tm (°C) | | 12 |

Beispiel 11

Man erhitzt unter Rühren in einer Stickstoffatmosphäre eine Mischung aus 97,86 g (0,209 mol) 2,4,6-Triscarboxypentylamino-1,3,5-triazin und 400 g Polytetrahydrofuran (OH Zahl = 176) innerhalb von 90 min auf 205°C, rührt 5 Stunden bei 205°C wobei Wasser abdestilliert. Nachdem 1 Stunde bei 205°C bei 50 mbar gerührt ist, isoliert man 477,6 g (94,5% d.Th.) eines hochviskosen, flüssigen Polyols mit den folgenden Analysedaten:

| | berechnet für $C_{129}H_{252}O_{33}N_6$ | gefunden |
|---|---|---|
| % C | 64,15 | 63,68 |
| % H | 10,15 | 10,46 |
| % N | 3,47 | 3,60 |
| $\overline{M}n$ | 2415 | 2218 |
| $\overline{M}w/\overline{M}n$ | | 2,9 |
| OH-Zahl (mg KOH/g) | 69 | 77 |

Beispiel 12

Man erhitzt unter Rühren in einer Stickstoffatmospäre 156 g (0,33 mol) 2,4,6-Tricarboxypentylamino-1,3,5-triazin, 236 g (2 mol) 1,6-Hexandiol und 332 g (2 mol) Isophthalsäure innerhalb von 2 Stunden auf 240°C und rührt weitere 5 Stunden bei 240°C bis alles Wasser abdestilliert ist. Nach dem Abkühlen werden 628 g (96,8% d.Th.) eines festen Polyesterharzes isoliert, dessen Erweichungstemperatur auf der Koflerbank zu 60°C bestimmt wird.

| | berechnet für $C_{105}H_{132}O_{30}N_6$ | gefunden |
|---|---|---|
| % C | 64,40 | 64,38 |
| % H | 6,74 | 6,86 |
| % N | 4,29 | 4,30 |
| $\overline{M}n$ | 1958 | 1158 |
| $\overline{M}w/\overline{M}n$ | | 3,2 |
| Säurezahl (mg KOH/g) | 85 | 131 |
| Tg (°C) | | 20 |

Beispiel 13

Man erhitzt unter Rühren in einer Stickstoffatmosphäre 156 g (0,33 mol) 2,4,6-Triscarboxypentylamino-1,3,5-triazin, 166 g (1,00 mol) Diethylenglykol und 106 g (1,00 mol) Isophthalsäure innerhalb von 90 min auf 220°C wobei Wasser abdestilliert. Nach 5 Stunden Rühren bei 220°C werden 358 g (91,3% d.Th.) eines festen Polyesterharzes isoliert, dessen Erweichungstemperatur auf der Koflerbank zu 70°C bestimmt wird.

| | berechnet für $C_{57}H_{72}O_{21}N_6$ | gefunden |
|---|---|---|
| % C | 58,16 | 58,16 |
| % C | 6,17 | 6,27 |
| % C | 6,17 | 6,27 |
| % N | 7,14 | 7,26 |
| $\overline{Mn}$ | 1176 | 856 |
| $\overline{Mw}/\overline{Mn}$ | | 2,4 |
| Säurezahl (mg KOH/g) | 142 | 106 |
| Tg (°C) | | 22 |

Beispiel 14

Man erhitzt unter Rühren in einer Stickstoffatmosphäre ein Gemisch aus 531 g (4,5 mol) Hexandiol, 776 g (4,0 mol) Terephthalsäuredimethylester, 4,8 g Zinkacetatdihydrat bei 160°C bis fast alles Methanol abdestilliert und rührt anschliessend 5 Stunden bei 217°C. Nach 40 Minuten Rühren bei 200 mbar gibt man 78 g (0,166 mol) 2,4,6-Triscarboxypentylamino-1,3,5-triazin hinzu, rührt 2 Stunden 15 Minuten bei 218°C, legt dann 15 Minuten ein Vakuum von 300 mbar an und gibt schliesslich 96 g (0,50 mol) Trimesinsäureanhydrid zu. Nach einer halben Stunde bei 217°C werden 1080 g (88,2% d.Th.) weisses Polyesterharz mit einer auf der Koflerbank zu 135°C bestimmten Erweichungstemperatur isoliert.

| | berechnet für $C_{402}H_{468}N_6O_{120}$ | gefunden |
|---|---|---|
| % C | 66,04 | 65,43 |
| % H | 6,45 | 6,40 |
| % N | 1,15 | 1,12 |
| $\overline{Mn}$ | 7304 | 5823 |
| $\overline{Mw}/\overline{Mn}$ | | 6,0 |
| Säurezahl (mg KOH/g) | 77 | 57,7 |
| Tm (°C) | | 138 |
| Tg (°C) | | 30 |

Beispiel 15

Man erhitzt unter Rühren in einer Stickstoffatmosphäre ein Gemisch aus 532 g (4,5 mol) Hexandiol, 388,4 g (2 mol) Terephthalsäuredimethylester, 388,4 g (2 mol) Isophthalsäuredimethylester und 4 g Zinkacetat bei 160°C bis der grösste Teil des Methanols abdestilliert. Nach 5 Stunden Rühren bei 200°C und 30 Minuten Evakuieren (150 mbar) werden 78 g (0,17 mol) 2,4,6-Triscarboxypentylamino-1,3,5-triazin zugegeben. Nach 2 Stunden 35 Minuten rührt man 35 Minuten bei 300 mbar und gibt 96 g (0,50 mol) Trimellithsäureanhydrid zu. Nach weiteren 90 Minuten bei 200°C isoliert man 1070 g (87,3% d.Th.) eines gummiartigen amorphen bräunlichen Festharzes, dessen Erweichungstemperatur auf der Koflerbrank zu 84°C bestimmt wird.

| | berechnet für $C_{402}H_{468}N_6O_{120}$ | gefunden |
|---|---|---|
| % C | 66,04 | 65,57 |
| % C | 6,45 | 6,47 |
| % N | 1,15 | 1,04 |
| $\overline{Mn}$ | 7304 | 5585 |
| $\overline{Mw}/\overline{Mn}$ | | 5,5 |
| Säurezahl (mg KOH/g) | 77 | 51 |
| Tg (°C) | | 16 |

Beispiel 16

Man erhitzt unter Rühren in einer Stickstoffatmosphäre ein Gemisch aus 472 g (4 mol) 1,6-Hexandiol, 315 g (0,5 Mol) dihydroxyterminiertes Polytetrahydrofuran (OH Zahl 178), 776 g (4 mol) Terephthalsäuredimethylester und 4,8 g Zinkdiacetatdihydrat auf 160°C bis der grösste Teil des Methanols abdestilliert ist und anschliessend für 5 Stunden auf 220°C, rührt 40 Minuten bei 220°C und 170 mbar, gibt 78 g (0,166 mol) 2,4,6-Triscarboxypentylamino-1,3,5-triazin zu rührt weitere 2 Stunden und 15 Minuten bei 220°C.

Nachdem 20 Minuten bei 300 mbar die Kondensation vervollständigt ist, gibt man 96 g (0,5 Mol) Trimellithsäureanhydrid hinzu. Nach 105 Minuten Rühren bei 210°C isoliert man 1350 g (91% d.Th.) eines weissen festen Polyesterharzes, das bei 122°C erweicht (bestimmt auf der Koflerbank) und folgende Analysendaten aufweist:

| | gefunden |
|---|---|
| % C | 65,45 |
| % H | 7,23 |
| % N | 0,92 |
| Säurezahl (mg KOH/g) | 39 |
| Tm (°C) | 119 |
| Tg (°C) | 39 |
| $\overline{Mn}$ | 5978 |
| $\overline{Mw}/\overline{Mn}$ | 6,40 |

Beispiel 17

Man erhitzt unter Rühren in einer Stickstoffatmosphäre ein Gemisch aus 532 g (4,5 mol) Hexandiol-1,6, 582,6 g (3 mol) Terephthalsäuredimethylester, 194,2 g (1,00 mol) Isophthalsäuredimethylester und 4 g Zinkacetatdihydrat bei 160°C bis der grösste Teil des Methanols abdestilliert ist und rührt anschliessend 5 Stunden bei 212°C. Nach 30 Minuten Vakuum (170 mbar) gibt man 78 g (0,17 mol) 2,4,6-Triscarboxypentylamino-1,3,5-triazin zu, rührt 2 Stunden 45 Minuten bei 212°C, evakuiert 25 Minuten bei 300 mbar und gibt 96 g (0,5 Mol) Trimellithsäureanhydrid zu. Nach 90 Minuten Rühren bei 212°C isoliert man 1000 g (81,2% d.Th.) eines weissen festen Polyesterharzes, das auf der Koflerbank bei 100°C erweicht.

| | berechnet für $C_{402}H_{468}N_6O_{120}$ | gefunden |
|---|---|---|
| % C | 66,04 | 65,86 |
| % H | 6,45 | 6,47 |
| % N | 1,15 | 1,14 |
| $\overline{M}n$ | 7304 | 6230 |
| $\overline{M}w/\overline{M}n$ | | 6,3 |
| Säurezahl (mg KOH/g) | 77 | 48 |
| Tm (°C) | | 96 |
| Tg (°C) | | 24 |

Beispiel 18

Man erhitzt unter Rühren in einer Stickstoffatmosphäre ein Gemisch aus 405,5 g (4,5 mol) 1,4-Butandiol, 233 g (1,20 mol) Terephthalsäuredimethylester, 543,8 g (2,8 mol) Isophthalsäuredimethylester und 7,6 g Zinkdiacetatdihydrat auf 160°C bis der grösste Anteil des Methanols abdestilliert ist und danach 5 Stunden bei 205°C. Nach 45 Minuten Rühren bei 200 mbar gibt man 78 g (0,17 mol) 2,4,6-Triscarboxypentylamino-1,3,5-triazin zu, erhitzt 2 Stunden 30 Minuten bei 210°C und evakuiert 15 Minuten bei 300 mbar. Dann werden 96 g (0,50 mol) Trimellithsäureanhydrid zugegeben und 90 Minuten bei 197°C gerührt. Man isoliert 980 g eines glasartigen leicht bräunlichen festen Polyesterharzes, das auf der Koflerbank bei 52°C erweicht.

| | berechnet für $C_{348}H_{360}N_6O_{120}$ | gefunden |
|---|---|---|
| % C | 63,78 | 63,19 |
| % H | 5,54 | 5,40 |
| % N | 1,28 | 1,28 |
| Säurezahl (mg KOH/g) | 86,0 | 114 |
| Tg (°C) | | 26 |

Beispiel 19

Wie in Beispiel 18 beschrieben erhitzt man unter Rühren in einer Stickstoffatmosphäre 405,5 g (4,5 mol) 1,4-Butandiol, 388,4 g (2 mol) Terephthalsäuredimethlester, 388,4 g (2 mol) Isophthalsäuredimethylester und kondensiert mit 78 g (0,17 mol) 2,4,6-Tris-carboxypentylamino-1,3,5-triazin und schliesslich 96 g (0,50 ml) Trimellithsäureanhydrid. Man isoliert 950 g (83,7% d.Th.) eines bräunlichen Glases, das auf der Koflerbank bei 73°C erweicht.

| | berechnet für $C_{340}H_{360}N_6O_{120}$ | gefunden |
|---|---|---|
| % C | 63,78 | 63,16 |
| % H | 5,54 | 5,41 |
| % N | 1,28 | 1,30 |
| Säurezahl (mg KOH/g) | 86 | 101 |
| Tg (°C) | | 27 |

Beispiel 20

Wie in Beispiel 18 beschrieben, werden 405,5 g (4,5 mol) 1,4-Butandiol, 543,8 g (2,8 mol) Terephthalsäuredimethylester, 233,0 g (1,30 mol) Isophthalsäuredimethylester und 4 g Zinkacetatdihydrat

mit 78 g (0,17 mol) 2,4,6-Triscarboxypentylamino-1,3,5-triazin kondensiert und schliesslich mit 96 g (0,50 mol) Trimellithsäureanhydrid umgesetzt. Man isoliert 950 g (83,70% d.Th.) eines weissen festen Polyesterharzes, das auf der Koflerbank bei 152°C erweicht.

| | berechnet für $C_{204}H_{216}N_6O_{72}$ | gefunden |
|---|---|---|
| % C | 63,78 | 63,22 |
| % H | 5,54 | 5,39 |
| % N | 1,28 | 1,34 |
| Säurezahl (mg KOH/g) | 86 | 90 |
| Tm (°C) | | 165 |
| Tg (°C) | | 32 |

Beispiel 21

Man erhitzt unter Rühren in einer Stickstoffatmosphäre ein Gemisch aus 27,5 g (0,08 mol) 2,4,6-Tris(ethylaminobenzoat)-1,3,5-triazin, 159 g (0,25 mol) dihydroxy-terminiertes Polytetrahydrofuran (OH Zahl 178) und 0,5 g Zinkacetat 4 Stunden bei 220°C und schliesslich 1 Stunde bei 50 mbar. Danach gibt man 37 g (0,25 mol) Phthalsäureanhydrid zu und rührt 70 Minuten bei 175°C. Es werden 207 g (95,8% d.Th.) eines hochviskosen Polyesterharzes isoliert mit den folgenden Analysendaten:

| | berechnet für $C_{156}H_{246}O_{42}N_6$ | gefunden |
|---|---|---|
| % C | 65,11 | 65,02 |
| % H | 8,62 | 8,95 |
| % N | 2,92 | 2,93 |
| $\overline{M}n$ | 2877 | 2023 |
| $\overline{M}w/\overline{M}n$ | | 2,3 |
| Säurezahl (mg KOH/g) | 58 | 86 |

Beispiel 22

Man erhitzt unter Rühren in einer Stickstoffatmosphäre ein Gemisch aus 55 g (0,17 mol) 2,4,6-Tris(ethylaminobenzoat)-1,3,5-triazin, 59 g (0,50 mol) 1,6-Hexandiol und 0,5 g Zinkacetatdihydrat 4 Stunden auf 215°C wobei Ethanol abdestilliert. Nach Anlegen von 50 mbar Vakuum über 50 Minuten werden 74 g (0,50 mol) Phthalsäureanhydrid zugegeben. Nach 70 Minuten Rühren bei 175°C werden 143,7 g (83% d.Th.) eines festen Polyesterharzes, das auf der Koflerbank bei 76°C erweicht, isoliert.

| | berechnet für $C_{66}H_{66}N_6O_{18}$ | gefunden |
|---|---|---|
| % C | 64,38 | 64,73 |
| % H | 5,40 | 5,70 |
| $\overline{M}n$ | 1231 | 1014 |
| $\overline{M}w/\overline{M}n$ | | 5,7 |
| Säurezahl (mg KOH/g) | 136 | 155 |
| Tg (°C) | | 28 |

Beispiel 23

Man erhitzt unter Rühren in einer Stickstoffatmosphäre ein Gemisch auf 156 g (0,33 mol) 2,4,6-Triscarboxypentylamino-1,3,5-triazin, 636 g (1,00 mol) dihydroxyterminiertes Polytetrahydrofuran (OH Zahl 178 mg) 3 Stunden bei 210°C und evakuiert bei 100 mbar 2 Stunden. Dann gibt man bei 160°C 194 g (1,00 mol) Trimellithsäureanhydrid zu. Nach 2 Stunden Rühren bei 160°C isoliert man 890 g (92% d.Th.) eines viskosen flüssigen Polyesterharzes mit den folgenden Analysendaten:

| | berechnet für $C_{156}H_{264}N_6O_{48}$ | gefunden |
|---|---|---|
| % C | 62,63 | 62,29 |
| % H | 8,89 | 8,78 |
| % N | 2,80 | 2,88 |
| $\overline{Mn}$ | 2991 | 3140 |
| $\overline{Mn}/\overline{Mn}$ | | 4,45 |
| Säurezahl (mg KOH/g) | 112 | 72 |

Beispiel 24

Man erhitzt unter Rühren in einer Stickstoffatmosphäre 39 g (0,08 mol) 2,4,6-Triscarboxypentylamino-1,3,5-triazin, 500 g (0,25 mol) dihydroxyterminiertes Polytetrahydrofuran (OH Zahl 56) 3 Stunden bei 220°C. Nach zweistündiger Kondensation bei 100 mbar gibt man bei 170°C 48 g (0,25 mol) Trimellithsäureanhydrid zu und rührt weitere zwei Stunden. Es werden 555 g (95% d.Th.) eines leicht gelblichen viskosen Polyesterharzes isoliert mit den folgenden Analysendaten:

| | |
|---|---|
| % C | 64,77 |
| % H | 10,06 |
| % N | 1,18 |
| $\overline{Mn}$ | 5506 (ber. 7000) |
| $\overline{Mw}/\overline{Mn}$ | 3,7 |
| Säurezahl (mg KOH/g) | 51 (ber. 48) |

Beispiel 25

Unter Rühren werden in einer Stickstoffatmosphäre 39 g (0,083 mol) 2,4,6-Triscarboxypentylamino-1,3,5-triazin und 500 g dihydroxyterminiertes Polytetrahydrofuran (OH Zahl 56) bei 210°C fünf Stunden erhitzt, wobei Wasser abdestilliert. Nach Kondensation bei 50 mbar wird ein leicht gelbliches flüssiges Polyesterharz isoliert mit den folgenden Analysendaten:

| | |
|---|---|
| % C | 65,44 |
| % H | 10,75 |
| % N | 1,33 |
| $\overline{Mn}$ | 6339 (ber. 6420) |
| $\overline{Mw}/\overline{Mn}$ | 3,7 |
| OH Zahl (mg KOH/g) | 26 (ber. 33) |

Beispiel 26

Man erhitzt unter Rühren in einer Stickstoffatmosphäre 468 g (1,00 mol) 2,4,6-Triscarboxypentylamino-1,3,5-triazin und 354 g (3,00 mol) 1,6-Hexandiol 5 Stunden bei 210°C und anschliessend 2 Stunden bei 100 mbar. Es werden 748 g (97% d.Th.) eines halbfesten Polyesterharzes isoliert mit den folgenden Analysendaten:

| | berechnet für $C_{39}H_{72}N_6O_9$ | gefunden |
|---|---|---|
| % C | 60,90 | 60,60 |
| % H | 9,43 | 9,42 |
| % N | 10,90 | 10,95 |
| $\overline{M}n$ | 769 | 1515 |
| $\overline{M}w/\overline{M}n$ | | 3,4 |
| OH Zahl (mg KOH/g) | 218 | 218 |

Beispiel 27

Man erhitzt unter Rühren in einer Stickstoffatmosphäre ein Gemisch aus 472 g (4 mol) 1,6-Hexandiol, 348,4 g (2 mol) Adipinsäuredimethylester und 2 g Zinkacetatdihydrat 5 Stunden auf 200°C wobei Methanol abdestilliert. Nachdem bei 200°C 1 Stunde bei 200 mbar kondensiert wurde, gibt man 312 g (0,66 mol) 2,4,6-Triscarboxypentylamino-1,3,5-triazin zu, rührt 2 Stunden bei 195°C und legt 45 Minuten 300 mbar Vakuum an. Man isoliert 930 g (94% d.Th.) eines leicht gelblichen halbfesten Polyesterharzes mit den folgenden Analysendaten:

| | berechnet für $C_{75}H_{132}N_6O_{21}$ | gefunden |
|---|---|---|
| % C | 61,96 | 61,92 |
| % H | 9,15 | 9,20 |
| % N | 5,77 | 5,84 |
| $\overline{M}n$ | 1454 | 2405 |
| $\overline{M}n/\overline{M}n$ | | 6,9 |
| OH-Zahl (mg KOH/g) | 115 | 127 |

Beispiel 28

Man erhitzt unter Rühren in einer Stickstoffatmosphäre 51,6 g (0,20 mol) 2,4,6-Trishydroxyethylamino-1,3,5-triazin und 121,4 g (0,60 mol) Sebazinsäure 5 Stunden auf 200°C wobei Wasser abdestilliert. Nach Anlegen von 200 mbar Vakuum über 1 Stunde isoliert man 142,6 g (87,9% d.Th.) eines halbfesten Polyesterharzes mit den folgenden Analysendaten:

| | berechnet für $C_{39}H_{66}N_6O_{12}$ | gefunden |
|---|---|---|
| % C | 57,76 | 57,91 |
| % H | 8,20 | 8,50 |
| % N | 10,36 | 10,11 |
| $\overline{M}n$ | 810 | 515 |
| $\overline{M}w/\overline{M}n$ | | 2,3 |
| Säurezahl (mg KOH/g) | 276 | 237 |

Beispiel 29

Zu einer Lösung von 184 g (1 mol) 2,4,6-Trichlor-1,3,5-triazin in 2 l trockenem Dioxan, in dem 280 g (2 mol) Kaliumcarbonat suspendiert sind, tropft man unter Eiskühlung eine Lösung von 375 g (0,5 mol) Bisaminopropylpolytetrahydrofuran ($\overline{M}n$ = 750) so zu, dass die Innentemperatur 20°C nicht übersteigt. Nach Abklingen der exothermen Reaktion wird 15 Minuten gerührt und dann 128 g (2 mol) Aminoethanol zugetropft bei 20°C. Danach kocht man über Nacht am Rückfluss, filtriert warm das Salz ab und zieht das

Lösungsmittel im Vakuum ab. Das wachsartige Harz hat eine OH-Zahl von 170 (berechnet 190) und ein Molekulargewicht $\overline{M}n$ = 728, $\overline{M}w/\overline{M}n$ = 3,1 (berechnet $\overline{M}n$ = 1175). 118 g (0,1 mol) dieses Harzes werden nun mit 80,9 g (0,4 mol) Sebazinsäure 5 Stunden auf 240°C erhitzt wobei Wasser abdestilliert. Nachdem bei dieser Temperatur 1 Stunde bei 200 mbar kondensiert wurde, isoliert man 157,9 g (82,3 d.Th.) halbfestes Polyesterharz mit den folgenden Analysendaten:

| | berechnet für $C_{96}H_{174}O_{26}N_{12}$ | gefunden |
|---|---|---|
| % C | 60,31 | 60,05 |
| % H | 9,17 | 9,12 |
| % N | 8,78 | 9,01 |
| $\overline{M}n$ | 1912 | 1423 |
| $\overline{M}w/\overline{M}n$ | | 2,9 |
| Säurezahl (mg KOH/g) | 117 | 94 |

Beispiel 30

Eine Mischung aus 400 g (2 Mol) Cyclohexan-1,4-dicarbonsäuredimethylester, 388 g (2 Mol) Isophthalsäuredimethylester, 648 g (4,5 Mol) Cyclohexan-1,4-dimethanol und 3,5 g Zinkacetat werden unter Stickstoff bei 160°C und nach beendeter Methanoldestillation 4 Stunden bei 210°C und 30 Minuten bei 210°C und 200 mbar gerührt. Dann gibt man 78,5 (0,166 Mol) 2,4,6-Tricarboxypentylamino-1,3,5-triazin zu, rührt 2 Stunden bei 210°C und 15 Minuten bei 210C/300 mbar und versetzt anschliessend mit 96,1 g (1 Mol) Trimellithsäurehydrid. Nach 90 Minuten Rühren bei 210°C isoliert man ein festes glasartiges Polyesterharz mit den folgenden Analysendaten:

Erweichungstemperatur (Kofler): 110°C
Glasübergangstemperatur: 54°C
Säurezahl 36 mg KOH/g
$M_n$ = 2900
$M_w/M_n$ = 3,3

ANWENDUNGSBEISPIELE

Beispiel A

Man verklebt Blechstreifen aus Anticorodal mit einer Mischung aus 4,65 g Araldit F (Epoxidzahl = 5,04 Val/kg) und 5 g Polyester gem.

Beispiel 1 und härtet während 3 Stunden bei 120°C
3 Stunden bei 180°C
1 Stunden bei 200°C

Die Zugscherfestigkeit gem. DIN 53183 beträgt 17,99 N/mm².

Beispiel B

Man verfährt wie in Beispiel A und prüft folgende Klebstoffmischung:

| | |
|---|---|
| Diglycidylether auf Basis von Bisphenol A*: | 9,19 g |
| Polyester nach Beispiel 1: | 5,00 g |

*) Epoxidzahl: 5,25 Val/kg.

Die Zugscherfestigkeit gemäss DIN 53,183 beträgt 22,5 N/mm².

Beispiel C

Man verfährt wie in Beispiel A und prüft folgende Klebstoffmischung:

| | |
|---|---|
| Epoxidierter Phenol-Novolak**: | 4,11 g |
| Polyester nach Beispiel 1: | 5,00 g |

**) Epoxidzahl: 6,0 Val/kg.

Die Zugscherfestigkeit gemäss DIN 53,183 beträgt 20,2 N/mm².

Beispiel D

Man härtet 5 g des Polyesterharzes aus Beispiel 3 mit 1,2 g Triglycidylisocyanurat bei 100°C. Die Gelierzeit wird bei 100°C zu 19 Minuten bestimmt.

Beispiel E

Man verklebt Blechstreifen aus Anticorodal mit einer Mischung aus Polyesterharzen der Beispiele 3—10 mit Diglycidylether von Bisphenol A (Epoxidwert: 5,3 Val/kg), wobei einem Aequivalent Carboxylgruppe ein Aequivalent Epoxygruppe entspricht. Gehärtet wird 8 Stunden bei 140°C. Die Zugscherfestigkeiten werden nach DIN 53183 bestimmt. Die Resultate sind in der Tabelle zusammengefasst:

| Polyesterharz aus Beispiel | Zugscherfestigkeit ($N/mm^2$) |
|---|---|
| 3 | 4,1 (±0,2) |
| 4 | 16,0 (±1,2) |
| 5 | 8,8 (±0,4) |
| 6 | 25,3 (±2,3) |
| 7 | 16,6 (±1,6) |
| 8 | 7,7 (±0,3) |
| 9 | 5,3 (±0,6) |
| 10 | 2,5 (±0,2) |

Beispiel F

Herstellung eines Pulverlackes

Komponenten: 440 g Polyester gem. Beisp. 2
60 g Triglycidylisocyanurat
5 g Modaflow®-Powder II
1 g Benzoin
250 g Titandioxyd

Die Komponenten werden gemeinsam während 15 min. in einem Rhönradmischer gemischt. Das Gemisch wird bei 80—100°C in einem Extruder homogenisiert, gekühlt und anschliessend bis zu einer mittleren Korngrösse von ca. 50 µm gemahlen. Danach wird das Pulver mit einer elektrostatischen Pulverspritzpistole auf ein gereinigtes Aluminiumblech aufgetragen und 15 min. bei 200°C gehärtet. Der entstehende Lackfilm hat eine Dicke von ca. 60 µm; er zeigt sehr gute mechanische Eigenschaften und eine sehr gute Bewitterungsbeständigkeit.

Messwerte
Einbrennbedingungen: 15 Min 200°C
Erichsentiefung[1] (mm): 9,0
Schlagrevers[2] (cm kg): 160
Acetontest[3] (Note): 2
Glanz 60° (%): 85
Glanz nach 1500 Std.
Bewitterung im WOM: 85

[1] Erichsentiefziehtest: Test nach DIN 53,156

[2] Schlagrevers: Auf beschichteten Aluminiumbleche wird von hinten aus bestimmter Höhe ein Stempel mit einem bekannten Gewicht fallengelassen. Der erhaltene Wert (Höhe mal Gewicht) zeigt den grössten Schlag an, bei dem die Beschichtung noch unbeschädigt bleibt.

[3] Acetontest: Ein mit Aceton getränkter Lappen wird eine Minute lang auf der beschichteten Oberfläche liegen gelassen. Anschliessend wird die behandelte Oberfläche mit dem Fingernagel auf ihre Lösungsmittelrestenz hin überprüft. Die Bewertung erfolgt nach einer Skala von 0 bis 5, wobei 0 ausgezeichnete und 5 schlecte Resistenz bedeutet.

Beispiel G (Schmelzkleber)

Eine Schmelze des Polyesterharzes aus Beispiel 16 wird bei 180°C auf Aluminiumprüfkörper

aufgetragen, die dann zusammengepasst werden. Nach Abkühlen wird eine Zugscherfestigkeit von 8,9 N/mm$^2$ gemessen.

**Patentansprüche**

1. Verbindungen der Formeln I, II, III und IV

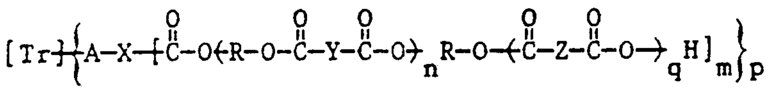 (I),

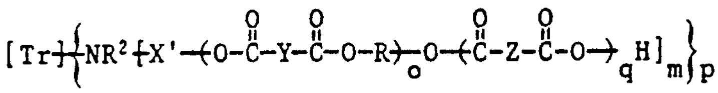 (II),

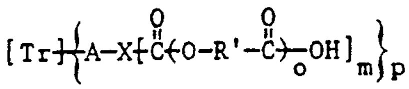 (III),

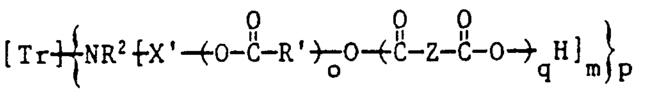 (IV),

worin Tr ein Rest der Formel V oder VI ist

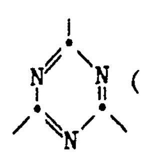 (V), 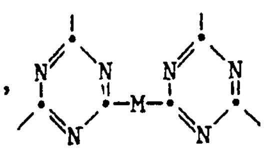 (VI),

A —O— oder —NR$^1$— bedeutet, R$^1$ Wasserstoff, gegebenenfalls substituiertes $C_1$—$C_{20}$Alkyl, $C_5$—$C_9$Cycloalkyl, gegebenenfalls substituiertes Phenyl oder $C_7$—$C_9$Aralkyl darstellt,

X ein di- oder tri-funktioneller Rest einer Hydroxy- oder Amino-carbonsäure nach Entfernen der funktionellen Gruppen bedeutet, oder A und X zusammen den Rest einer über das Stickstoffatom an den Rest Tr gebundenen heterocyclischen Aminocarbonsäure nach dem Entfernen der Carboxylgruppe darstellen,

R$^2$, im Falle vom m = 1, eine der Bedeutungen von R$^1$ annimmt oder R$^2$, im Falle von m = 2, ein freies Elektronenpaar darstellt,

R der Rest eines aliphatischen, cycloaliphatischen, aromatischen, araliphatischen oder heterocyclischen Diols nach dem Entfernen der beiden Hydroxylgruppen ist, der gegebenenfalls Substituenten trägt, die keine aktiven Wasserstoffatome aufweisen,

Y der Rest einer aliphatischen, cycloaliphatischen, aromatischen, araliphatischen oder heterocyclischen Dicarbonsäure nach dem Entfernen der beiden Carboxylgruppen ist, der gegebenenfalls Substituenten trägt, die keine aktiven Wasserstoffatome aufweisen,

Z einen der Bedeutungen von Y besitzt, aber zusätzlich auch Carbonsäure- oder Sulfonsäurereste als Substituenten tragen kann,

R' der zweiwertige Rest einer aliphatischen, cycloaliphatischen, aromatischen oder araliphatischen Hydroxycarbonsäure nach dem Entfernen der Carboxylgruppe und der Hydroxylgruppe bedeutet,

X' der zwei- oder dreiwertige Rest eines aliphatischen, cycloaliphatischen, aromatischen oder araliphtischen Aminoalkohols nach dem Entfernen der Amino- und der Hydroxylgruppe(n) ist,

n eine ganze Zahl von 0—40 bedeutet, o eine ganze Zahl von 1—40 darstellt, m 1 oder 2 ist, q 0 oder 1 bedeutet und p, abhängig vom Rest Tr, 3 oder 4 bedeutet,

M einen Rest —W—Q—W— bedeutet, worin W —O—, —NR$^1$— oder —NR$^1$—X''—NR$^1$—OC— ist,

X'' der zweiwertige Rest eines aliphatischen, cycloaliphatischen, aromatischen oder araliphatischen Diamins nach dem Entfernen der Aminogruppen ist, und

Q ein zweiwertiger Oligomerrest mit 1 bis 60 Monomoreinheiten ist, der ausgewählt ist aus der Gruppe bestehend aus 1,2-Polybutadien, 1,4-Polybutadien, Acrylnitril-Butadien Copolymer, Polyether oder Polydialkylsiloxan, mit der Massgabe, dass bei Vorliegen eines Tr Restes der Formel V die Gruppe R und R' nur aliphatische oder cycloaliphatische Reste sein dürfen, und dass die Verbindungen keinen Schmelzpunkt oberhalb von 200°C besitzen, und dass wenigstens einer der Indizes n oder q in Formel II grösser als 0 ist.

2. Verbindungen der Formeln I, II und IV gemäss Anspruch 1, worin q 1 ist.

3. Verbindungen der Formeln I, II und IV gemäss Anspruch 1, worin q 0 ist.

4. Verbindungen der Formeln I, II, III und IV gemäss Anspruch 1, worin m 1 bedeutet.

5. Verbindungen der Formeln I, und III gemäss Anspruch 1, worin A —$NR^1$— ist.

6. Verbindungen der Formel I gemäss Anspruch 1, worin Tr ein Rest der Formel V ist, A —NH— bedeutet, X $-(CH_2)_5-$ ist und p 3 ist.

7. Verbindungen der Formeln I, II, III und IV gemäss Anspruch 1, worin X, R, Y, X', R' und Z unsubstituierte Reste bedeuten und Z die Bedeutung von Y besitzt, gegebenenfalls aber als zusätzlichen Substituenten mit aktiven Wasserstoffatomen eine Carboxylgruppe trägt.

8. Verbindungen der Formel I gemäss Anspruch 1, die endständige Carboxylgruppen tragen, und worin n eine ganze Zahl von 1 bis 10 bedeutet.

9. Verbindungen der Formeln I und II gemäss Anspruch 1, worin A —$NR^1$— ist, $R^1$ Wasserstoff oder $C_1$—$C_4$Alkyl bedeutet, X gegebenenfalls mit $C_1$—$C_4$Alkyl, $C_1$—$C_4$Alkoxy oder Halogen substituiertes $C_2$—$C_{20}$-Alkylen ist, R der Rest eines aliphatischen oder cycloaliphatischen Diols nach dem Entfernen der beiden Hydroxylgruppen ist, Y den aromatischen oder heterocyclischen Rest einer Dicarbonsäure nach dem Entfernen der beiden Carboxylgruppen darstellt, Z der Rest einer aromatischen Di- oder Tricarbonsäure nach dem Entfernen der Carboxylgruppen ist, R' der zweiwertige Rest einer aliphatischen oder cycloaliphatischen Hydroxycarbonsäure nach dem Entfernen der funktionnellen Gruppen ist, n eine ganze Zahl von 0—10 darstellt, o eine ganze Zahl von 1—10 ist, m 1 bedeutet und p 3 oder 4 ist, worin W —$NR^1$— oder —$NR^1$—X''—$NR^1$—OC— ist, und X'' den Rest eines aliphatischen oder cycloaliphatischen Diamins nach dem Entfernen der funktionellen Gruppen darstellt.

10. Verbindungen der Formeln I und II gemäss Anspruch 1, worin A —NH— ist, X—$(CH_2)_r$— bedeutet, r eine ganze Zahl von 5 bis 12 ist, R einen aliphatischen oder cycloaliphatischen Rest eines Diols nach dem Entfernen der beiden Hydroxylgruppen darstellt, R' der aliphatische Rest einer Hydroxycarbonsäure nach Entfernen der funktionellen Gruppen ist, Y den aliphatischen oder aromatischen Rest einer Dicarbonsäure nach dem Entfernen beider Carboxylgruppen darstellt, Z eine der Bedeutungen von Y besitzt und gegebenenfalls als Substituenten eine zusätzliche Carboxylgruppe tragen kann, n 0—4 beutet, o 1—4 ist und m 1 darstellt.

11. Verbindungen der Formeln I, und II gemäss Anspruch 1, worin R sich ableitet von Ethylenglykol, Propylenglykol, Butandiol-1,4, Neopentylglykol, Hexandiol-1,6, Dodecandiol-1,12, Polyethylenglykol, Polypropylenglykol, Polybutylenglykol, Polyhexamethylenglykol und Cyclohexandimethanol-1,4, und worin Y sich ableitet von Bernstein-, Glutar-, Adipin-, Sebazin- oder Azelainsäure sowie von dimeren Fettsäuren, Phthalsäure, Iso- und Terephthalsäure, worin m 1 ist, und Z sich von einer der unter Y erwähnten Dicarbonsäuren ableitet oder von Trimellith- oder Trimesinsäure.

12. Verbindungen der Formel I gemäss Anspruch 1, worin Tr ein Rest der Formel V ist, A —NH— bedeutet X $-(CH_2)_r-$ darstellt,

r eine ganze Zahl von 5 bis 12 ist,

R sich ableitet von einem $C_2$—$C_6$ aliphatischen Diol oder von Polyethylenglykol, Polypropylenglykol oder Polybutylenglykol mit 3 bis 30 Oxyalkyleneinheiten,

Y sich ableitet von Bernstein-, Adipin-, Sebazin- oder Azelainsäure,

Z eine der für Y definierten Bedeutungen annimmt oder sich ableitet von Phthal-, Isophthal-, Terephthal-, Trimellith- oder Trimesin- säure, m 1 ist, p 3 bedeutet und n eine ganze Zahl von 0 bis 10 ist.

13. Verbindungen der Formel I gemäss Anspruch 1, worin Tr ein Rest der Formel V ist, A —NH— bedeutet X $-(CH_2)_5-$ darstellt, R sich ableitet von Hexandiol-1,6, Neopentylglykol oder von Gemischen beider Alkohole, Y sich ableitet von Terephthalsäure, Z sich ableitet von Trimellithsäure, m 1 ist, n eine ganze Zahl von 1 bis 10 ist und q 1 bedeutet.

14. Verfahren zur der Herstellung der Verbindungen der Formel I gemäss Anspruch 1, dadurch gekennzeichnet, dass man

a) die Carbonsäure der Formel VII oder VIII oder eines ihrer funktionalisierten Derivate

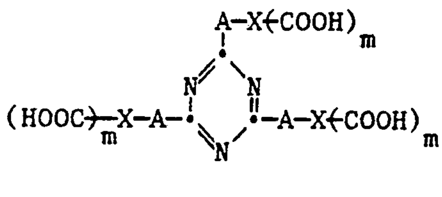

(VII),

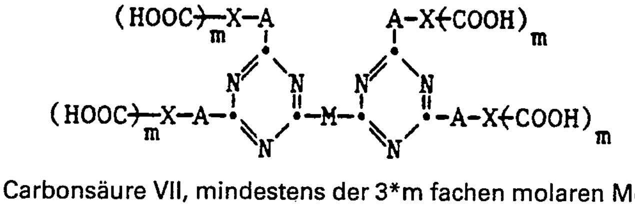

(VIII)

mit b), im Falle der Carbonsäure VII, mindestens der 3*m fachen molaren Menge des Diols der Formel IX, oder, im Falle der Carbonsäure VIII, mindestens der 4*m fachen molaren Menge des Diols der Formel IX oder eines funktionalisierten Derivate

HO—R—OH (IX)

und gegebenenfalls mit

c) der Dicarbonsäure der Formel X oder einem ihrer funktionalisierten Derivate

HOOC—Y—COOH (X)

umsetzt; dabei haben die Reste M, A, R, X und Y sowie der Index m die in Anspruch 1 definierte Bedeutung.

15. Verfahren zur der Herstellung von Verbindungen der Formel I gemäss Anspruch 14, dadurch gekennzeichnet, dass man einen molaren Anteil der Komponente a) mit (3—40)*m oder (4—40)*m molaren Anteilen der Komponente b) und (3—40)*m oder (4—40*m) molaren Anteilen der Komponente c) gemeinsam umsetzt, wobei die Mengen der einzelnen Komponenten so gewählt werden, dass das molare Verhältnis der Carboxylgruppen oder ihrer funktionalisierten Derivate zu den Hydroxylgruppen im Falle von carboxyl-terminierten Produkten der Formel I 1,01:1 bis 1,5:1 und im Falle von hydroxyl-terminierten Produkten der Formel I 0,6:1 bis 0,99:1 beträgt.

16. Verfahren zur Herstellung von Verbindungen der Formel I gemäss Anspruch 1, in denen Z ein Rest mit zusätzlichen Carbonsäure- oder Sulfonsäureresten ist oder sich von Y unterscheidet, dadurch gekennzeichnet, dass man a) einen hydroxylgruppen-terminierten Polyester gemäss Anspruch 14 herstellt und b) diesen anschliessend mit einer Di- oder Polycarbonsäure der Formel $HOOC—Z—(COOH)_b$ ($b \geq 1$) weiter umsetzt.

17. Verfahren zur Herstellung von Verbindungen der Formel I gemäss Anspruch 16, dadurch gekennzeichnet, dass die weitere Umsetzung mit Trimellithsäure oder Trimellithsäureanhydrid erfolgt.

18. Verfahren zur Herstellung von Verbindungen der Formel I gemäss Anspruch 14, dadurch gekennzeichnet, dass die Umsetzung in der Schmelze erfolgt.

19. Verfahren zur Herstellung von Verbindungen der Formel I gemäss Anspruch 14, dadurch gekennzeichnet, dass man

a) einen hydroxy-terminierten Polyester durch Ver- oder Umesterung herstellt,

b) diesen mit einen halben COOH-Aequivalent der Verbindung der Formel VII oder VIII gemäss Anspruch 14 umsetzt, bis die Säurezahl des Reaktionsgemisches weniger als 5 mg KOH/g beträgt, und

c) gegebenenfalls die verbleibenden Hydroxylgruppen mit dem entsprechenden molaren Anteil einer Di- oder Tricarbonsäure oder eines ihrer funktionalisierten Derivate umsetzt, bis die Säurezahl des Reaktionsgemische weniger als 100 mg KOH/g beträgt.

20. Verfahren zur Herstellung von Verbindungen der Formel II gemäss Anspruch 14, dadurch gekennzeichnet, dass man

a) die Carbonsäure der Formel VII oder VIII oder eines ihrer funktionalisierten Derivate

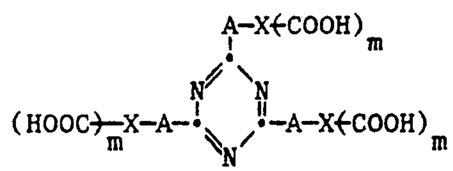
(VII),

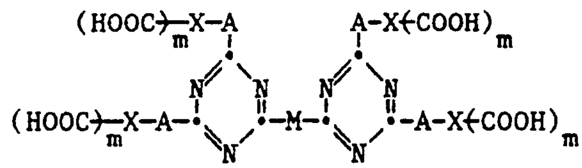
(VIII)

mit b), im Falle der Carbonsäure VII oder des entsprechenden funktionalisierten Derivates, mindestens der 3*m fachen molaren Menge der Hydroxycarbonsäure der Formel IX, oder, im Falle der Carbonsäure VIII oder des entsprechend funktionalisierten Derivates, mindestens der 4*m fachen molaren Menge der Hydroxycarbonsäure der Formel IX

HO—R'—COOH (XI)

umsetzt; dabei haben, A, X, M und R' sowie der Index m die in Anspruch 1 definierte Bedeutung.

21. Verfahren zur Herstellung von Verbindungen der Formel II gemäss Anspruch 14, dadurch gekennzeichnet, dass man

a) ein Polyol der Formel XII oder XIII

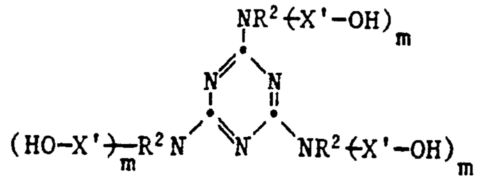

(XII),

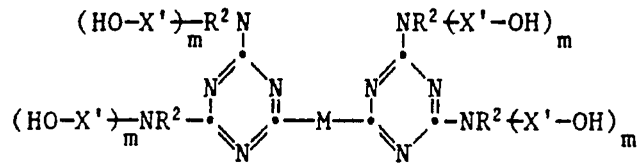

(XIII),

mit b), im Falle des Polyols XII, mindestens der 3*m fachen molaren Menge der Dicarbonsäure der Formel X, oder, im Falle des Polyols XIII, mindestens der 4*m fachen molaren Menge der Dicarbonsäure der Formel X oder eines ihrer funktionalisierten Derivate

HOOC—Y—COOH (X)

und gegebenenfalls

c) mit dem Diol der Formel IX oder einem seiner funktionalisierten Derivate

HO—R—OH (XI)

umsetzt und ein hydroxyl-terminiertes Reaktionsprodukt anschliessend gegebenenfalls mit der Polycarbonsäure HOOC—Z—(COOH)$_b$ ($b \geq 1$) verestert; dabei haben die Reste M, X′, $R^2$, R, Y und Z sowie der Index m die in Anspruch definierte Bedeutung.

22. Verfahren zur Herstellung von Verbindungen der Formel IV gemäss Anspruch 1, dadurch gekennzeichnet, dass man

a) ein Polyol der Formel XII oder XIII

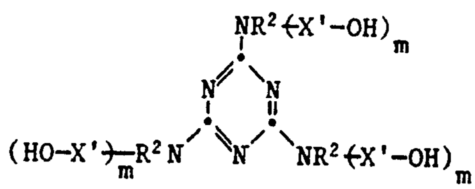

(XII),

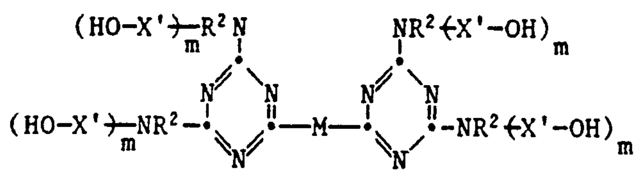

(XIII),

mit b), im Falle des Polyols XII, mindestens der 3*m fachen molaren Menge der Hydroxycarbonsäure der Formel XI, oder, im Falle des Polyols XIII, mindestens der 4*m fachen molaren Menge der Hydroxycarbonsäure der Formel XI

HO—R′—COOH (XI)

umsetzt und das hydroxyl-terminierte Reaktionsprodukt anschliessend gegebenenfalls mit der Polycarbonsäure HOOC—Z—(COOH)$_b$ ($b \geq 1$) verestert; dabei haben M, X′, $R^2$, R′ und Z sowie der Index m die in Anspruch 1 definierte Bedeutung.

23. Zusammensetzung enthaltend

a) ein Harz enthaltend mindestens eine 1,2-Epoxidgruppe im Molekül, und

b) eine Verbindung der Formel I, II, III oder IV gemäss Anspruch 1.

24. Verwendung der Zusammensetzungen gemäss Anspruch 23 als Klebstoffe oder Lacke.

25. Verwendung der Zusammensetzungen enthaltend carboxylgruppen-terminierte Verbindungen der Formel I, II, III oder IV gemäss Anspruch 23 als Pulverlacke.

26. Verwendung der Verbindungen der Formeln I bis IV gemäss Anspruch 1 als Komponenten von Schmelzklebern.

27. Pulverlacke enthaltend carboxyl-terminierte Verbindungen der Formel I bis IV gemäss Anspruch 1.

28. Formteile oder Ueberzüge, hergestellt durch Härtung der Zusammensetzung gemäss Anspruch 23.

29. Verbindungen der Formeln I, II, III und IV

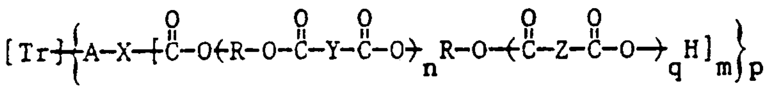 (I),

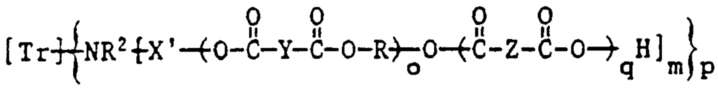 (II),

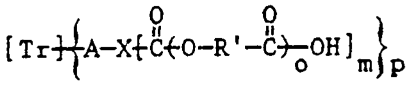 (III),

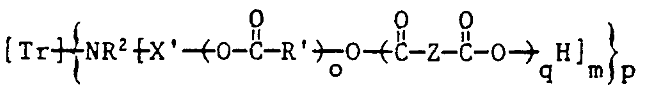 (IV),

worin Tr ein Rest der Formel V oder VI ist

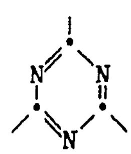 (V), 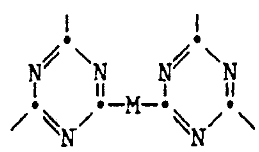 (VI),

A —O— oder —$NR^1$— bedeutet, $R^1$ Wasserstoff, gegebenenfalls substituiertes $C_1$—$C_{20}$Alkyl, $C_5$—$C_9$ Cycloalkyl, gegebenenfalls substituiertes Phenyl oder $C_7$—$C_9$Aralkyl darstellt,

X ein di- oder tri-funktioneller Rest einer Hydroxy- oder Amino-carbonsäure nach Entfernen der funktionellen Gruppen bedeutet, oder A und X zusammen den Rest einer über das Stickstoffatom an den Rest Tr gebundenen heterocyclischen Aminocarbonsäure nach dem Entfernen der Carboxylgruppe darstellen,

$R^2$ eine der Bedeutungen von $R^1$ annimmt oder ein freies Elektronenpaar darstellt,

R der Rest eines aliphatischen, cycloaliphatischen, aromatischen, araliphatischen oder heterocyclischen Diols nach dem Entfernen der beiden Hydroxylgruppen ist, der gegebenenfalls Substituenten trägt, die keine aktiven Wasserstoffatome aufweisen,

Y der Rest einer aliphatischen, cycloaliphatischen, aromatischen, araliphatischen oder heterocyclischen Dicarbonsäure nach dem Entfernen der beiden Carboxylgruppen ist, der gegebenenfalls Substituenten trägt, die keine aktiven Wasserstoffatome aufweisen,

Z eine der Bedeutungen von Y besitzt, aber zusätzlich auch Carbonsäure- oder Sulfonsäurereste als Substituenten tragen kann,

R′ der zweiwertige Rest einer aliphatischen, cycloaliphatischen, aromatischen oder araliphatischen Hydroxycarbonsäure nach dem Entfernen der Carboxylgruppe und der Hydroxylgruppe bedeutet,

X′ der zwei- oder dreiwertige Rest eines aliphatischen, cycloaliphatischen, aromatischen oder araliphatischen Aminoakohols nach dem Entfernen der Amino- und der Hydroxylgruppe(n) ist,

n eine ganze Zahl von 0—40 bedeutet, o eine ganze Zahl von 1—40 darstellt, m 1 oder 2 ist, q 0 oder 1 bedeutet und p, abhängig vom Rest Tr, 3 oder 4 bedeutet,

M einen Rest —W—Q—W— bedeutet, worin W —O—, —$NR^1$— oder —$NR^1$—X″—$NR^1$—OC— ist,

X″ der zweiwertige Rest eines aliphatischen, cycloaliphatischen, aromatischen oder araliphatischen Diamins nach dem Entfernen der Aminogruppen ist, und

Q ein zweiwertiger Oligomerrest mit 1 bis 60 Monomoreinheiten ist, der ausgewählt ist aus der Gruppe bestehend aus 1,2-Polybutadien, 1,4-Polybutadien, Acrylnitril-Butadien Copolymer, Polyether oder Polydialkylsiloxan, mit der Massgabe, dass bei Vorliegen eines Tr Restes der Formel V die Gruppen R und R′ nur aliphatische oder cycloaliphatische Reste sein dürfen, und dass die Verbindungen keinen Schmelzpunkt oberhalb von 200°C besitzen, und dass $R^2$ nur dann ein freies Elektronenpaar darstellt, wenn m 2 ist.

## Revendications

1. Composés répondant aux formules I, II, III et IV:

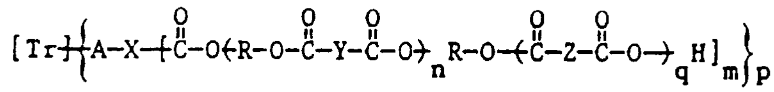 (I),

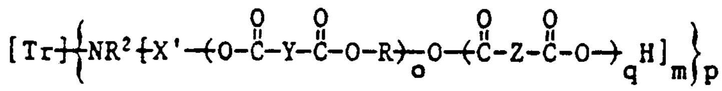 (II),

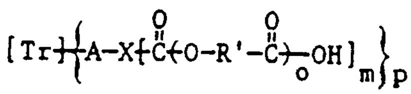 (III),

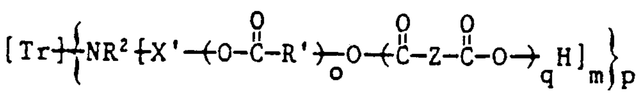 (IV),

dans lesquelles Tr représente un reste de formule V ou VI:

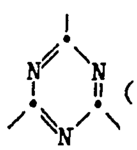 (V), 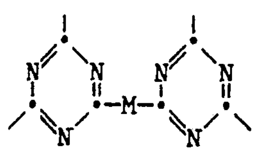 (VI),

A représente —O— ou —$NR^1$—, $R^1$ représente un atome d'hydrogène, un groupe alkyle en $C_1$ à $C_{20}$ éventuellement substitué, cycloalkyle en $C_5$ à $C_9$, phényle éventuellement substitué ou aralkyle en $C_7$ à $C_9$,

X est un reste difonctionnel au trifonctionnel d'un acide hydroxycarboxylique aminocarboxylique, après enlèvement des groupes fonctionnels, ou bien A et X représente, après l'enlèvement des groupes carboxyles, le reste d'un acide aminocarboxylique hétérocyclique lié par l'intermédiaire de l'atome d'azote au reste Tr,

$R^2$, si m vaut 1 à l'une des significations de $R^1$ ou de $R^2$ et, si m vaut 2, il représente un paire d'électrons libres,

R représente le reste d'un diol aliphatique, cycloaliphatique, aromatique, araliphatique ou hétérocyclique, après l'enlèvement des deux groupes hydroxyles, ce reste portant éventuellement des substituants ne présentant pas d'atomes d'hydrogène actif,

Y représente le reste d'un acide dicarboxylique aliphatique, cycloaliphatique, aromatique, araliphatique ou hétérocyclique, après l'enlèvement des deux groupes carboxyles, ce reste pouvant éventuellement porter des substituants qui ne présentent pas d'atomes d'hydrogène actif,

Z a l'une des significations de Y, mais il peut porter en outre aussi des restes d'un acide carboxylique ou d'un acide sulfonique, comme substituant,

R' représente le reste divalent d'un acide hydroxycarboxylique aliphatique, cycloaliphatique, aromatique ou araliphatique, après l'enlèvement du groupe carboxyle et du groupe hydroxyle,

X' représente le reste divalent ou trivalent d'un aminoalcool aliphatique, cycloaliphatique, aromatique ou araliphatique, après enlèvement du ou des groupes amino et hydroxyles,

n est un nombre entier valant 0 à 40, o est un nombre entier valant 1 à 40, m vaut 1 ou 2, que est nul ou vaut 1 et p, selon la reste Tr, vaut 3 ou 4, M représente un reste —W—Q—W—, où W représente —O—, —$NR^1$— ou —$NR^1$— X''—$NR^1$—OC—,

X'' est le reste divalent d'un diamine aliphatique, cycloaliphatique, aromatique ou araliphatique, après l'enlèvement du groupe amino, et

Q représente un reste oligomère divalent comportant 1 à 60 motifs monomères, qui est choisi dans l'ensemble constitué par du polybutadiène-1,2, du polybutadiène-1,4, un copolymère d'acrylonitrile/

butadiène, un polyéther ou un polydialkylsiloxane, à la condition qu'en cas de présence d'un reste Tr de formule V, les groupes R et R' ne peuvent être que des restes aliphatiques ou cycloaliphatiques, et que les composés ne présentent pas de point de fusion supérieur à 200°C, et que, dans la formule II, au moins l'un des indices n ou q est supérieur à 0.

2. Composés répondant aux formules I, II et IV selon la revendication 1, dans lesquels q vaut 1.

3. Composés répondant aux formules I, II et IV selon la revendication 1, dans lesquels q est nul.

4. Composés répondant aux formules I, II, III et IV selon la revendication 1, dans lesquels m vaut 1.

5. Composés répondant aux formules I et III sel'on la revendication 1, dans lesquels A représente $—NR^1—$.

6. Composés de formule I selon la revendication 1, dans lesquels Tr est un reste de formule V, A représente —NH—, X représente $-(CH_2)_3-$ et p vaut 3.

7. Composés répondant aux formules I, II, III et IV selon la revendication 1, dans lesquels X, R, Y, X', R' et Z représentent des restes non substitués, et Z a le sens de Y, mais portent éventuellement un groupe carboxyle comme substituant supplémentaire comportant des atomes d'hydrogène actif.

8. Composés de formule I selon la revendication 1, qui portent des groupes carboxyles terminaux, et dans lesquels n est un nombre entier valant 1 à 10.

9. Composés répondant aux formules I et III selon la revendication 1, dans lesquels A représente $—NR^1—$, $R^1$ représente n atome d'hydrogène ou un groupe alkyle en $C_1$ à $C_4$, X est un groupe alylène en $C_2$ à $C_{20}$ éventuellement substitué par un groupe alkyle en $C_1$ à $C_4$, alcoxy en $C_1$ à $C_4$ un halogéno, R représente le reste d'un diol aliphatique ou cycloaliphatique, après enlèvement des deux groupes hydroxyles; Y représente le reste aromatique ou hétérocyclique d'un acide dicarboxylique, après enlèvement des deux groupes carboxyles; Z représente le reste d'un acide dicarboxylique ou tricarboxylique aromatique, après enlèvement des groupes carboxyles; R' représente le reste divalent d'un acide hydroxycarboxylique aliphatique ou cycloaliphatique, après l'enlèvement des groupes fontionnels; n est un nombre entier valant 0 à 10; o est un nombre entier valant 1 à 10; m vaut 1 et p vaut 3 ou 4, w représentant $—NR^1—$ ou $—NR^1—X''—NR^1—OC$, et X'' représente le reste d'une diamine aliphatique ou cycloaliphatique, après l'enlèvement des groupes fonctionnels.

10. Composés répondant aux formules I et III selon la revendication 1, dans lesquels A représente —NH—, X représente $-(CH_2)_r-$; r est un nombre entier valant 5 à 12; R représente un reste aliphatique ou cycloaliphatique d'un diol après enlèvement des deux groupes hydroxyles; R'' représente le reste aliphatique d'un acide hydroxycarboxylique après enlèvement des groupes fonctionnels; Y représente le reste aliphatique ou aromatique d'un acid dicarboxlique, après l'enlèvement des deux groupes carboxyles; Z a l'un des sens de Y et peut porter éventuellement comme substituant un groupe carboxyle supplémentaire; n vaut 0 à 4, o vaut 1 à 4 et m vaut 1.

11. Composés répondant aux formules I et II selon la revendication 1, dans lesquels R dérive de l'éthylène-glycol, du propylène-glycol, du butanediol-1,4, du néopentyl-glycol, de l'hexanediol-1,6, du dodécanediol-1,12, du polyéthylène-glycol, du polypropylène-glycol, du polybutylène-glycol, du polyhexaméthylène-glycol et du cyclohexanediméthanol-1,4, et Y dérive de l'acide succinique, glutarique, adipique, sébacique ou azélaïque ou d'acides gras dimères, de l'acide phtalique, de l'acide insophtalique ou de l'acide téréphtalique, m vaut 1, et Z dérivé d'un des acides dicarboxyliques cités dans le cas de Y ou dérive de l'acide trimellitique ou trimésique.

12. Composés de formule I selon la revendication 1, dans lequels Tr représente un reste de formule V; A représente —NH—; X représente $-(CH_2)_r-$, R est un nombre entier valant 5 à 12, R dérive d'un diol aliphatique en $C_2$ à $C_6$ ou d'un polyéthylène-glycol, d'un polypropylène-glycol ou d'un polybutylène-glycol comportant 3 à 30 motifs oxyalkylènes;

Y dérive de l'acide succinique, adipique, sébacique ou azélaïque,

Z a l'une des significations définies pour Y ou bien il dérive de l'acide phtalique, isophtalique, téréphthalique, trimellitique ou trimésique; m vaut 1, p vaut 3 et n est un nombre entier valant 0 à 10.

13. Composés de formule I selon la revendication 1, dans lequels Tr représente un reste de formule V, A représente —NH—, X représente $-(CH_2)_5-$, R dérive de l'hexanediol-1,6, du néopentyl-glycol ou de mélanges de ces deux alcools, Y dérive de l'acide téréphtalique, Z dérive de l'acide trimellitique, m vaut 1, n est un nombre entier valant 1 à 10 et q vaut 1.

14. Procédé pour préparer des composés de formule I selon la revendication 1, caractérisé en ce que l'on fait réagir:

a) l'acide carboxylique de formule VII ou VIII, ou un de leurs dérivés fonctionnalisés:

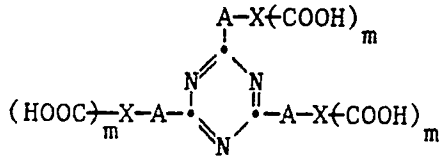

(VII),

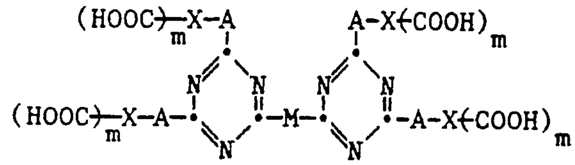

(VIII)

avec b), dans le cas de l'acide carboxylique VII, au moins la quantité 3*m molaire du diol de formule IX ou dans le cas de l'acide carboxylique VIII, au moins la quantité 4*m fois molaire du diol de formule IX ou d'un de ses dérivés fonctionnalisés:

HO—R—OH (IX)

et éventuellement avec

c) l'acide dicarboxylique de formule X, ou un de ses dérivés fonctionnalisés:

HOOC—Y—COOH (X)

et les restes M, A, R, X et Y ainsi que l'indice m ont le sens défini à la revendication 1.

15. Procédé pour préparer des composés de formule I selon la revendication 14, caractérisé en ce qu'on fait réagir une proportion molaire du composant a) avec (3 à 40)*m ou (4 à 40)*m parties molaires du composant b) et (3 à 40)*m ou (4 à 40)*m proportions molaires du composant c) l'un avec l'ature, en choisissant les quantités des composants individuels de manière que le rapport molaire entre les groupes carboxyles, ou leurs dérivés fonctionnalisés, et les groupes hydroxy se situent, dans le cas des produits terminés par un groupe carboxyle, de formule I, entre 1,01:1 et 1,5:1 et, dans le cas des produits terminés par un groupe hydroxyle, de formule I, entre 0,6:1 et 0,99:1.

16. Procédé pour préparer des composés de formule I selon la revendication 1, dans lesquels Z représente un reste comportant des restes acides carboxyliques ou acides sulfoniques supplémentaires, où Z est différent de Y, procédé caractérisé en ce qu'on fait réagir encore a) un polyester terminé par des groupes hydroxyles, selon la revendication 14, et b) celui-ci ensuite avec un acide dicarboxylique ou polycarboxylique de formule $HOOC—Z—(COOH)_b$, l'indice b étant ≥ 1.

17. Procédé pour préparer des composés de formule I selon la revendication 16, caractérisé en ce que la réaction supplémentaire a lieu avec l'acide trimellitique ou l'anhydride de l'acide trimellitique.

18. Procédé pour préparer des composés de formule I selon la revendication 14, caractérisé en ce que la réaction a lieu en masse fondue.

19. Procédé pour préparer des composés de formule I selon la revendication 1, terminés par des groupes carboxyles, procédé caractérisé en ce que:

a) on prépare, par estérification ou transestérification, un polyester terminé par un groupe hydroxyle,

b) on fait réagir ce polyester avec un demiéquilvalent de COOH du composé de formule VII ou VIII selon la revendication 14, jusqu'à ce que l'indice d'acide du mélange réactionnel soit inférieur à 5 mg de KOH/g, et

c) on fait éventuellement réagir les groupes hydroxyles restants avec la proportion molaire correspondantes d'un acide dicarboxylique ou tricarboxylique ou d'un des ses dérivés fonctionnalisés, jusqu'à ce que l'indice d'acide du mélange réactionnel soit inférieur à 100 mg de KOH/g.

20. Procédé pour préparer des composés de formule III selon la revendication 1, caractérisé en ce qu'on fait réagir:

a) l'acide carboxlique de formule VII ou VIII, ou un de ses dérivés fonctionnalisés:

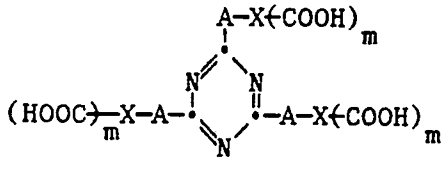

(VII),

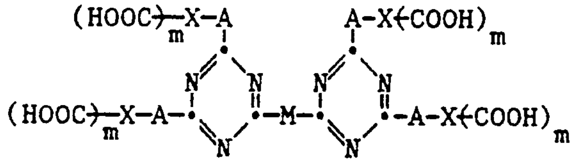

(VIII)

avec b), dans le cas de l'acide carboxylique VII ou du dérivé fonctionnalisé correspondant, au moins la quantité 3*m fois molaire de l'acide hydroxycarboxylique de formule XI ou bien, dans le cas de l'acide carboxylique VIII, ou du dérivé fonctionnalisé correspondant, avec au moins la quantité 4*m fois molaire de l'acide hydroxycarboxlique de formule XI:

$$HO—R'—COOH \qquad (XI)$$

et, dans ces formules, A, X, M et R' ainsi que l'indice m ont la signification définie à la revendication 1.

21. Procédé pour préparer des composés de formule II selon la revendication 1, caractérisé en ce qu'on fait réagir:

a) un polyol de formule XII ou XIII:

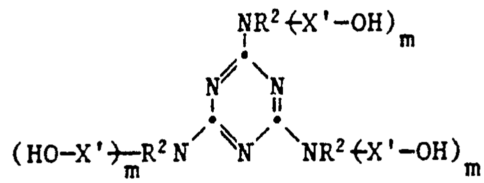

(XII),

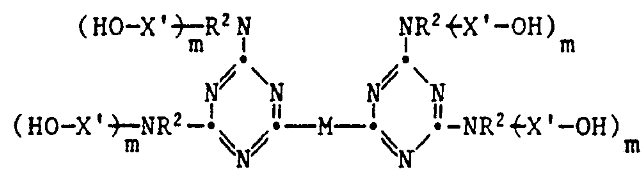

(XIII),

avec b), dans le cas du polyol XII, au moins la quantité 3*m fois molaire de l'acide dicarboxylique de formule X ou, dans le cas du polyol XIII, avec au moins la quantité 4*m fois molaire de l'acide dicarboxylique de formule X, ou d'un de ses dérivés fontionnalisés:

$$HOOC—Y—COOH \qquad (X)$$

et, éventuellement

c) avec le diol de formule IX ou avec son dérivé fonctionnalisé:

$$HO—R—OH \qquad (IX)$$

et l'on soumet éventuellement ensuite un produit de réaction, terminé par un groupe hydroxyle, à une estérification avec un acid polycarboxylique $HOOC—Z—(COOH)_b$ ($b \geq 1$); et les restes M, X', $R^2$, R, Y et Z, ainsi que l'indice m, ont le sens défini à la revendication 1.

22. Procédé pour préparer des composés de formule IV selon la revendication 1, caractérisé en ce qu'on fait réagir:

a) un polyol de formule XII ou XIII;

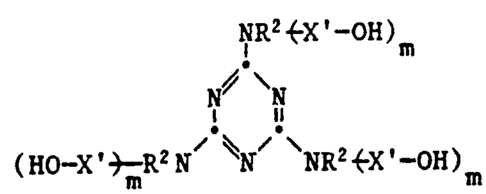

(XII),

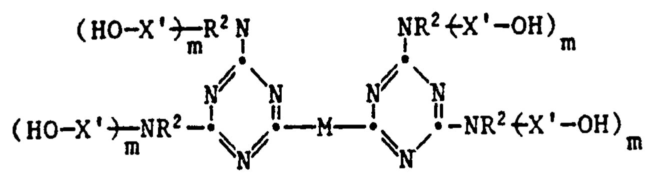

(XIII),

avec b), dans le cas du polyol XII, au moins la quantité 3*m fois molaire de l'acide hydroxycarboxylique de formule XI ou bien, dans le cas du polyol XIII, avec au moins la quantité 4*m fois molaire de l'acide hydroxycarboxylique de formule XI:

$$HO—R'—COOH \qquad (XI)$$

et l'on soumet éventuellement ensuite le produit de réaction, terminé par un groupe hydroxyle, à une

estérification avec l'acide polycarboxylique HOOC—Z—(COOH)$_b$ (b ≥ 1); les symboles M, X', $R^2$, R' et Z ainsi que l'indice m ayant le sens défini à la revendication 1.

23. Compositions contenant;

a) une résine contenant au moins dans sa molécule un groupe époxyde-1,2, et

b) une composé répondant aux formules I, II, III, ou IV selon la revendication 1.

24. Utilisation des compositions selon la revendication 23 comme adhésifs ou colles ou bien comme laques ou vernis.

25. Utilisation des compositions contenant des composés, terminés par des groupes hydroxyles et répondant aux formules I, II, III ou IV selon la revendication 23, à titre de laques ou vernis en poudre.

26. Utilisation des composés répondant aux formules I à IV selon la revendication 1 comme composants de colles à faire fondre.

27. Laques en poudre contenant des composés, terminés par des groupes carboxyles et répondant aux formules I à IV selon la revendication 1.

28. Objets moulés ou revêtement, proudits par durcissement de la composition selon la revendication 23.

29. Composés répondant aux formules I, II, III et IV:

$$[Tr]\left\{A-X-[\overset{O}{\overset{\|}{C}}-O(R-O-\overset{O}{\overset{\|}{C}}-Y-\overset{O}{\overset{\|}{C}}-O)_n R-O-(\overset{O}{\overset{\|}{C}}-Z-\overset{O}{\overset{\|}{C}}-O)_q H]_m\right\}_p \quad (I),$$

$$[Tr]\left\{NR^2[X'-(O-\overset{O}{\overset{\|}{C}}-Y-\overset{O}{\overset{\|}{C}}-O-R)_o O-(\overset{O}{\overset{\|}{C}}-Z-\overset{O}{\overset{\|}{C}}-O)_q H]_m\right\}_p \quad (II),$$

$$[Tr]\left\{A-X[\overset{O}{\overset{\|}{C}}(O-R'-\overset{O}{\overset{\|}{C}})_o OH]_m\right\}_p \quad (III),$$

$$[Tr]\left\{NR^2[X'-(O-\overset{O}{\overset{\|}{C}}-R')_o O-(\overset{O}{\overset{\|}{C}}-Z-\overset{O}{\overset{\|}{C}}-O)_q H]_m\right\}_p \quad (IV),$$

dans lesquelles Tr représente un reste de formule V ou VI:

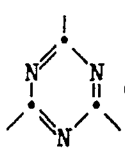 (V), 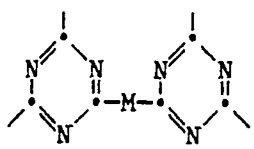 (VI),

A représente —O— ou —$NR^1$—, $R^1$ représente un atome d'hydrogène, un groupe alkyle en $C_1$ à $C_{20}$ éventuellement substitué, cycloalkyle en $C_5$ à $C_9$, phényle éventuellement substitué ou aralkyle en $C_7$ à $C_9$,

X est un reste difonctionnel au trifonctionnel d'un acide hydroxycarboxylique aminocarboxylique, après enlèvement des groupes fonctionnels, ou bien A et X forment ensemble le reste d'un acide aminocarboxylique hétérocyclique, relié au reste Tr par l'intérmediaire de l'atome d'azote, après enlèvement des groupes carboxyles; $R^2$ a l'une des significations de $R^1$ ou représente une paire d'électrons libres;

$R^2$, si m vaut 1 à l'une des significations de $R^1$ ou de $R^2$ et, si m vaut 2, il représente un paire d'électrons libres,

R représente le reste d'un diol aliphatique, cycloaliphatique, aromatique, araliphatique ou hétérocyclique, après l'enlèvement des deux groupes hydroxyles, ce reste portant éventuellement des substituants ne présentant ne présentant pas d'atomes d'hydrogène actif,

Y représente le reste d'un acide dicarboxylique aliphatique, cycloaliphatique, aromatique, araliphatique ou hétérocyclique, après l'enlèvement des deux groupes carboxyles, ce reste portant éventuellement des substituants qui ne présentent pas d'atomes d'hydrogène actif,

Z a l'une des significations de Y, mais il peut en outre porter comme substituants également des restes acides carboxliques ou acides sulfoniques;

R' représente le reste divalent d'un acide hydroxycarboxylique aliphatique, cycloaliphatique, aromatique ou araliphatique, après l'enlèvement du groupe carboxyle et du groupe hydroxyle,

X' représente le reste divalent ou trivalent d'un aminoalcool aliphatique, cycloaliphatique, aromatique ou araliphatique, après enlèvement du ou des groupes amino et hydroxyles,

n est un nombre entier valant 0 à 40, o est un nombre entier valant 1 à 40, m vaut 1 ou 2; q vaut 0 ou 1 et

p, selon ce que représente le reste Tr, vaut 3 ou 4, M représente un reste —W—Q—W—, où W représente —O—, —$NR^1$— ou —$NR^1$—X''—$NR^1$—OC—,

X'' represent le reste divalent d'une diamine aliphatique, cycloaliphatique, aromatique ou araliphatique, après l'enlèvement du groupes amino, et

Q est un reste oligomère divalent comportant 1 à 40 motifs monomères, qui est choisi dans l'ensemble constitué par du polybutadiène-1,2, du polybutadiène-1,4, un copolymère d'acrylonitrile et de butadiène, un polyéther ou un polydialkylsiloxane, à la condition qu'en cas de présence d'un reste Tr de formule V, les groupes R et R' ne puissent être que des restes aliphatiques ou cycloaliphatiques, et que les composés ne présentent pas de point de fusion supérieur à 200°C; et que, $R^2$ ne représente une paire d'électrons libres que lorsque m vaut 2.

**Claims**

1. A compound of formula I, II, III or IV

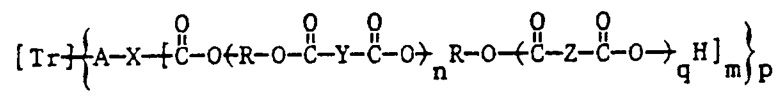 (I),

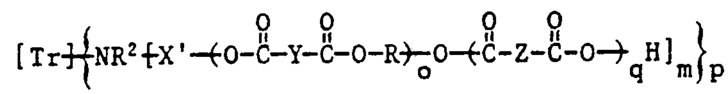 (II),

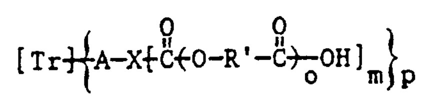 (III),

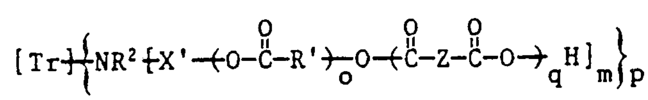 (IV),

in which Tr is a radical of formula V or VI

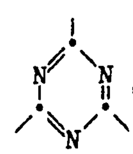 (V), 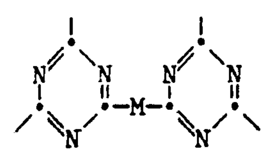 (VI),

A is —O— or —$NR^1$—, $R^1$ is hydrogen, unsubstituted or substituted $C_1$—$C_{20}$alkyl, $C_5$—$C_9$cycloalkyl, unsubstituted or substituted phenyl or $C_7$—$C_9$aralkyl,

X is a di- or trifunctional radical or a hydroxycarboxylic or aminocarboxylic acid after removal of the functional groups, or A and X together are the radical of a heterocyclic aminocarboxylic acid after removal of the carboxyl group, which radical is attached to the radical Tr through the nitrogen atom,

$R^2$, if m is 1, has one of the meanings of $R^1$, or $R^2$, if m is 2, is a free electron pair,

R is the radical of an aliphatic, cycloaliphatic, aromatic, araliphatic or heterocyclic diol after removal of the two hydroxyl groups, which radical may carry substituents containing no active hydrogen atoms,

Y is the radical of an aliphatic, cycloaliphatic, aromatic, araliphatic or heterocyclic dicarboxylic acid after removal of the two carboxyl groups, which radical may carry substituents containing no active hydrogen atoms,

Z has one of the meanings of Y, but may additionally also carry carboxylic acid or sulfonic acid radicals as substituents,

R' is the divalent radical of an aliphatic, cycloaliphatic, aromatic or araliphatic hydroxycarboxylic acid after removal of the carboxy group and the hydroxyl group,

X' is the di- or trivalent radical of an aliphatic, cycloaliphatic, aromatic or araliphatic aminoalcohol after removal of the amino and the hydroxyl group or groups,

n is an integer from 0 to 40, o is an integer from 1 to 40, m is 1 or 2, q is 0 or 1 and p, dependent on the radical Tr, is 3 or 4, M is a radical —W—Q—W—, in which W is —O—, —$NR^1$— or —$NR^1$—X''—$NR^1$—OC—,

X'' is the divalent radical of an aliphatic, cycloaliphatic, aromatic or araliphatic diamine after removal of the amino groups, and

Q is a divalent oligomer radical containing 1 to 60 monomer units, which radical is selected from the group consisting of 1,2-polybutadiene, 1,4-polybutadiene, acrylonitrile/butadiene copolymers, polyethers or polydialkylsiloxanes, with the proviso that if Tr is a radical of formula V, the groups R and R' may only be aliphatic or cycloaliphatic radicals, and that the compounds do not have a melting point above 200°C and that at least one of n and q in formula II is greater than 0.

2. A compound of formula I, II or IV according to claim 1, in which q is 1.

3. A compound of formula I, II or IV according to claim 1, in which q is 0.

4. A compound of formula I, II or IV according to claim 1, in which m is 1.

5. A compound of formula I or III according to claim 1, in which A is $—NR^1—$.

6. A compound of formula I according to claim 1, in which Tr is a radical of formula V, A is —NH—, X is $-(CH_2)_5-$ and p is 3.

7. A compound of formula I, II, III or IV according to claim 1, in which X, R, Y, X', R' and Z are unsubstituted radicals and Z has the meaning of Y, but may carry a carboxyl group as additional substituent having active hydrogen atoms.

8. A compound of formula I according to claim 1, which carries terminal carboxyl groups and in which n is an integer from 1 to 10.

9. A compound of formula I or III according to claim 1, in which A is $—NR^1—$, $R^1$ is hydrogen or $C_1—C_4$-alkyl, X is $C_2—C_{20}$alkylene which is unsubstituted or substituted by $C_1—C_4$alkyl, $C_1—C_4$alkoxy or halogen, R is the radical of an aliphatic or cycloaliphatic diol after removal of the two hydroxyl groups, Y is the aromatic or heterocyclic radical of a dicarboxylic acid after removal of the two carboxyl groups, Z is the radical of an aromatic dicarboxylic acid or tricarboxylic acid after removal of the carboxyl groups, R' is the divalent radical of an aliphatic or cycloaliphatic hydroxycarboxylic acid after removal of the functional groups, n is an integer from 0 to 10, o is an integer from 1 to 10, m is 1 and p is 3 or 4, in which W is $—NR^1—$ or $—NR^1—X''—NR^1—OC—$, and X'' is the radical of an aliphatic or cycloaliphatic diamine after removal of the functional groups.

10. A compound of formula I or III according to claim 1, in which A is —NH—, X is $—(CH_2)_r—$, r is an integer from 5 to 12, R is an aliphatic or cycloaliphatic radical of a diol after removal of the two hydroxyl groups, R' is the aliphatic radical or a hydroxycarboxylic acid after removal of the functional groups, Y is the aliphatic or aromatic radical of a dicarboxylic acid after removal of the two carboxyl groups, Z has one of the meanings of Y and may carry as substituent an additional carboxyl group, n is 0 to 4, o is 1 to 4 and m is 1.

11. A compound of formula I or II according to claim 1, in which R is derived from ethylene glycol, propylene glycol, 1,4-butanediol, neopentyl glycol, 1,6-hexandiol, 1,12-dodecandiol, polyethylene glycol, polypropylene glycol, polybutylene glycol, polyhexamethlene glycol and 1,4-cyclohexanedimethanol and in which Y is derived from succinic, glutaric, adipic, sebacic or azelaic acid and from dimeric fatty acids, phthalic acid, isophthalic acid or terephthalic acid, and in which m is 1 and Z is derived from one of the dicarboxylic acids mentioned for Y or from trimellitic acid or trimesic acid.

12. A compound of formula I according to claim 1, in which Tr is a radical of formula V,
A is —NH—,
X is $-(CH_2)_r-$,
r is an integer from 5 to 12,
R is derived from a $C_2—C_6$aliphatic diol or from polyethylene glycol, polypropylene glycol or polybutylene glycol containing 3 to 30 oxyalkylene units,
Y is derived from succinic, adipic, sebacic or azelaic acid,
Z has one of the meanings defined for Y or is derived from phthalic, isophthalic, terephthalic, trimellitic or trimesic acid,
m is 1,
p is 3 and n is an integer from 0 to 10.

13. A compound of formula I according to claim 1, in which Tr is a radical of formula V, A is —NH—, X is $-(CH_2)_5-$, R is derived from 1,6-hexanediol, neopentyl glycol or from mixtures of both alcohols, Y is derived from terephthalic acid, Z is derived from trimellitic acid, m is 1, n is an integer from 1 to 10, and q is 1.

14. A process for the preparation of a compound of formula I according to claim 1, which process comprises reacting

(a) the carboxylic acid of formula VII or VIII or a functionalised derivative thereof

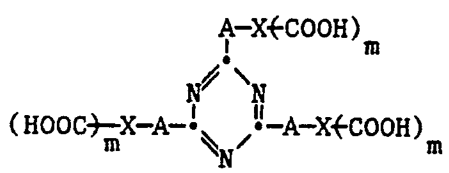
(VII),

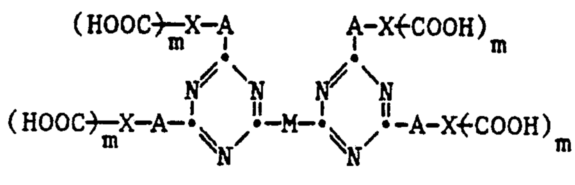
(VIII)

with (b), in the case of the carboxylic acid VII, at least 3*m times the molar amount of the diol of

formula IX, or, in the case of the carboxylic acid VIII, at least 4*m times the molar amount of the diol of formula IX or of a functionalised derivative thereof

HO—R—OH (IX)

and, if desired, with

(c) the carboxylic acid of formula X or a functionalised derivative thereof

HOOC—Y—COOH (X)

the radicals M, A, R, X and Y and the index m being as defined in claim 1.

15. A process for the preparation of a compound of formula I according to claim 14, which process comprises reacting together one molar proportion of component a) with (3—40)*m molar proportions of component b) and 3—40)*m) or 4—40)*m molar proportions of component c), the amounts of the individual components being chosen such that the molar ratio of the carboxyl groups or functionalised derivatives thereof to the hydroxyl groups in the case of carboxyl-terminated products of formula I is 1.01:1 to 1.5:1 and in the case of hydroxyl-terminated products of formula I is 0.6:1 to 0.99:1.

16. A process for the preparation of a compound of formula I according to claim 1, in which Z is a radical containing additional carboxylic acid or sulfonic acid radicals or Z is different from Y, which process comprises (a) preparing in accordance with claim 14 a hydroxyl-terminated polyester and (b) subsequently further reacting said hydroxyl-terminated polyester with a di- or polycarboxylic acid of the formula $HOOC\text{-}Z\text{-}(COOH)_b$ ($b \geq 1$).

17. A process for the preparation of a compound of formula I according to claim 16, which process comprises carrying out the further reaction with trimellitic acid or trimellitic anhydride.

18. A process for the preparation of a compound of formula I according to claim 14, which process comprises carrying out the reaction in the melt.

19. A process for the preparation of a carboxyl-terminated compound of formula I according to claim 1 which process comprises

(a) preparing a hydroxyl-terminated polyester by esterification or transesterification,

(b) reacting said polyester with a half COOH equivalent of the compound of formula VII or VIII according to claim 14 until the acid value of the reaction mixture is less than 5 mg KOH/g, and

(c) if desired, reacting the remaining hydroxyl groups with the corresponding molar portion of a di- or tricarboxylic acid or of a functionalised derivative thereof until the acid value of the reaction mixture is less than 100 mg KOH/g.

20. A process for the preparation of a compound of formula III according to claim 1, which process comprises reacting

(a) the carboxylic acid of formula VII or VIII or a functionalised derivative thereof

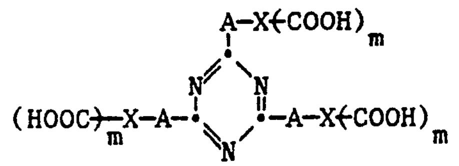

(VII),

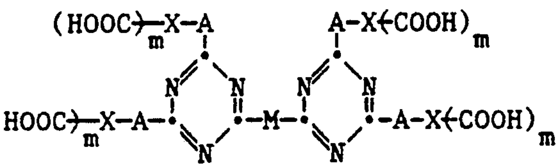

(VIII)

with (b), in the case of the carboxylic acid VII or the corresponding functionalised derivative, at least 3*m times the molar amount of the hydroxycarboxylic acid of formula XI, or, in the case of the carboxylic acid VIII or the correspondingly functionalised derivative, at least 4*m times the molar amount of the hydroxycarboxylic acid of formula XI

HO—R'—COOH (XI)

A, X, M and R' and the index m being as defined in claim 1.

21. A process for the preparation of a compound of formula II according to claim 1, which process comprises reacting

(a) a polyol of formula XII or XIII

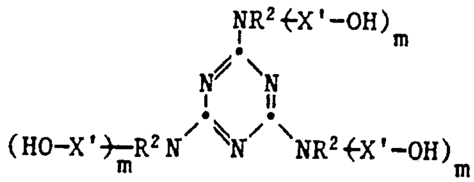

(XII),

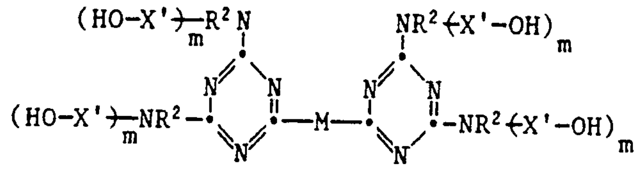

(XIII),

with (b), in the case of the polyol XII, at least 3*m times the molar amount of the dicarboxylic acid of formula X, or, in the case of the polyol XIII, at least 4*m times the molar amount of the dicarboxylic acid of formula X or of a functionalised derivative thereof

$$HOOC—Y—COOH \quad (X)$$

and optionally

(c) with the diol of formula IX or a functionalised derivative thereof

$$HO—R—OH \quad (IX)$$

and, if desired, subsequently esterifying a hydroxyl-terminated reaction product with the polycarboxylic acid $HOOC—Z{+}COOH)_b$ ($b \geq 1$); the radicals M, X, $R^2$, R, Y and Z and the index m being as defined in claim 1.

22. A process for the preparation of a compound of formula IV according to claim 1, which process comprises reacting

(a) a polyol of formula XII or XIII

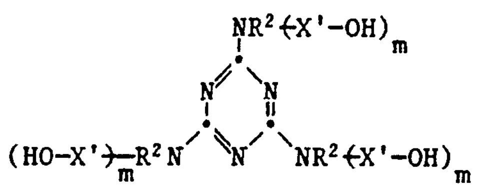

(XII),

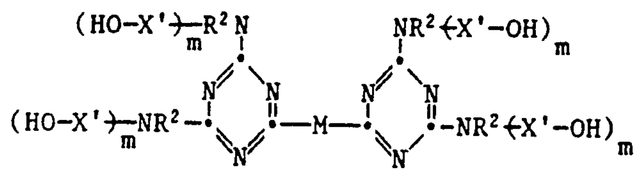

(XIII),

with (b), in the case of the polyol XII, at least 3*m times the molar amount of hydroxycarboxylic acid of formula XI, or, in the case of the polyol XIII, at least 4*m times the amount of the hydroxycarboxylic acid of formula XI

$$HO—R'—COOH \quad (XI)$$

and, if desired, subsequently reacting the hydroxyl-terminated reaction product with the polycarboxylic acid $HOOC—Z{+}COOH)_b$ ($b \geq 1$); the radicals M, X', $R^2$, R' and Z and the index m being as defined in claim 1.

23. A composition which contains

(a) a resin containing at least one 1,2-epoxide group in the molecule, and

(b) a compound of formula I, II, III or IV according to claim 1.

24. Use of a composition according to claim 23 as an adhesive or surface coating.

25. Use of a composition containing a carboxyl-terminated compound of formula I, II, III or IV according to claim 23 as a powder coating.

26. Use of a compound of formula I to IV according to claim 1 as a component of a hot melt adhesive.

27. A powder coating containing a carboxyl-terminated compound of formula I to IV according to claim 1.

28. A moulded article or coating, prepared by curing the composition according to claim 23.

29. A compound of formula I, II, III or IV

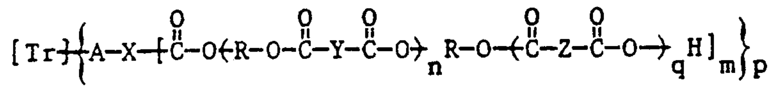 (I),

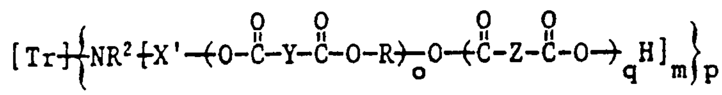 (II),

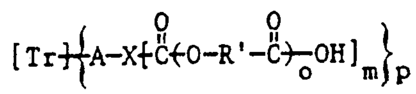 (III),

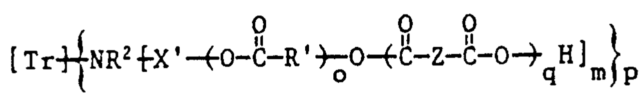 (IV),

in which Tr is a radical of formula V or VI

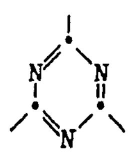 (V), 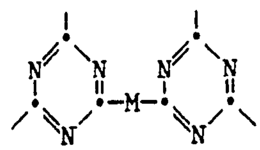 (VI),

A is —O— or —$NR^1$—, $R^1$ is hydrogen, unsubstituted or substituted $C_1$—$C_{20}$alkyl, $C_5$—$C_9$cycloalkyl, unsubstituted or substituted phenyl or $C_7$—$C_9$aralkyl,

X is a di- or trifunctional radical or a hydroxycarboxylic or aminocarboxylic acid after removal of the functional groups, or A and X together are the radical of a heterocyclic aminocarboxylic acid after removal of the carboxyl group, which radical is attached to the radical Tr through the nitrogen atom,

$R^2$ has one of the meanings of $R^1$, or $R^2$ is a free electron pair,

R is the radical of an aliphatic, cycloaliphatic, aromatic, araliphatic or heterocyclic diol after removal of the two hydroxyl groups, which radical may carry substituents containing no active hydrogen atoms,

Y is the radical of an aliphatic, cycloaliphatic, aromatic, araliphatic or heterocyclic dicarboxylic acid after removal of the two carboxyl groups, which radical may carry substituents containing no active hydrogen atoms,

Z has one of the meanings of Y, but may additionally also carry carboxylic acid or sulfonic acid radicals as substituents,

R′ is the divalent radical of an aliphatic, cycloaliphatic, aromatic or araliphatic hydroxycarboxylic acid after removal of the carboxyl group and the hydroxyl group,

X′ is the di- or trivalent radical of an aliphatic, cycloaliphatic, aromatic or araliphatic aminoalcohol after removal of the amino and the hydroxyl group or groups,

n is an integer from 0 to 40, o is an integer from 1 to 40, m is 1 or 2, q is 0 or 1 and p, dependent on the radical Tr, is 3 or 4, M is a radical —W—Q—W—, in which W is —O—, —$NR^1$— or —$NR^1$—X″—$NR^1$—OC—,

X″ is the divalent radical of an aliphatic, cycloaliphatic, aromatic or araliphatic diamine after removal of the amino groups, and

Q is a divalent oligomer radical containing 1 to 60 monomer units, which radical is selected from the group consisting of 1,2-polybutadiene, 1,4-polybutadiene, acrylonitrile/butadiene copolymers, polyethers or polydialkylsiloxanes, with the proviso that if Tr is a radical of formula V, the groups R and R′ may only be aliphatic or cycloaliphatic radicals, and that the compounds do not have a melting point above 200°C and that $R^2$ is only a free electron pair, if m is 2.